(19) Europäisches Patentamt
European Patent Office
Office européen des brevets

(11) **EP 4 293 585 B1**

(12) **EUROPEAN PATENT SPECIFICATION**

(45) Date of publication and mention
of the grant of the patent:
**21.08.2024   Bulletin 2024/34**

(21) Application number: **23174346.9**

(22) Date of filing: **19.05.2023**

(51) International Patent Classification (IPC):
**G06Q 10/04** (2023.01)     **G06Q 30/0202** (2023.01)
**G06Q 40/04** (2012.01)     **G06Q 50/06** (2024.01)
**G06Q 10/063** (2023.01)

(52) Cooperative Patent Classification (CPC):
**G06Q 10/04; G06Q 10/063; G06Q 30/0202;
G06Q 40/04; G06Q 50/06**

(54) **SYSTEMS AND METHODS FOR GENERATING OPTIMAL INTRADAY BIDS AND OPERATING SCHEDULES FOR DISTRIBUTED ENERGY RESOURCES**

SYSTEME UND VERFAHREN ZUR ERZEUGUNG OPTIMALER INTRATAGESANGEBOTE UND BETRIEBSPLÄNE FÜR VERTEILTE ENERGIERESSOURCEN

SYSTÈMES ET PROCÉDÉS DE GÉNÉRATION D'OFFRES INTRAJOURNALIÈRES OPTIMALES ET DE PROGRAMMES D'EXPLOITATION POUR DES RESSOURCES ÉNERGÉTIQUES DISTRIBUÉES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **16.06.2022   IN 202221034619**

(43) Date of publication of application:
**20.12.2023   Bulletin 2023/51**

(73) Proprietor: **Tata Consultancy Services Limited
400021 Mumbai, Maharashtra (IN)**

(72) Inventors:
• **LOKHANDE, SMITA SANJAY
400093 Mumbai, Maharashtra (IN)**
• **MAHILONG, NIDHISHA
411013 Pune, Maharashtra (IN)**
• **PRAJAPATI, ASHUTOSH
411013 Pune, Maharashtra (IN)**
• **BICHPURIYA, YOGESH KUMAR
411013 Pune, Maharashtra (IN)**
• **MENON, VISHNU PADMAKUMAR
411013 Pune, Maharashtra (IN)**
• **SARANGAN, VENKATESH
400093 Mumbai, Maharashtra (IN)**
• **RAJAGOPAL, NARAYANAN
411013 Pune, Maharashtra (IN)**

(74) Representative: **Goddar, Heinz J.
Boehmert & Boehmert
Anwaltspartnerschaft mbB
Pettenkoferstrasse 22
80336 München (DE)**

(56) References cited:
• **MENON VISHNU P ET AL: "Modeling Uncertainty of Day-ahead Market Prices for Energy Storage Aggregator", 2021 IEEE PES INNOVATIVE SMART GRID TECHNOLOGIES EUROPE (ISGT EUROPE), IEEE, 18 October 2021 (2021-10-18), pages 1 - 5, XP034053105, DOI: 10.1109/ISGTEUROPE52324.2021.9639927**
• **YANG CHANGHAI ET AL: "Optimal Scheduling Strategy of Demand Response Aggregators Considering Customers' Complicated Response Characteristic", 2021 IEEE 5TH CONFERENCE ON ENERGY INTERNET AND ENERGY SYSTEM INTEGRATION (EI2), IEEE, 22 October 2021 (2021-10-22), pages 3645 - 3650, XP034090330, DOI: 10.1109/EI252483.2021.9713221**
• **OLIVARES DANIEL E ET AL: "A Centralized Energy Management System for Isolated Microgrids", IEEE TRANSACTIONS ON SMART GRID, IEEE, USA, vol. 5, no. 4, 1 July 2014 (2014-07-01), pages 1864 - 1875, XP011551515, ISSN: 1949-3053, [retrieved on 20140618], DOI: 10.1109/TSG.2013.2294187**

## Description

CROSS-REFERENCE TO RELATED APPLICATIONS AND PRIORITY

The present application claims priority to Indian application no. 202221034619, filed on June 16, 2022.

TECHNICAL FIELD

The disclosure herein generally relates to distributed energy resources, and, more particularly, to systems and methods for generating optimal intraday bids and operating schedules for distributed energy resources.

BACKGROUND

Owing to their stochastic nature, Distributed Energy Resources (DERs) are more suited to participate in short-term or intraday electricity markets. The trading horizon of these markets is shorter than day-ahead markets but longer than flex/regulation markets. Very few of the existing works on DER trading in intraday markets satisfactorily model the different aspects of this problem. Customers at the distribution side are investing in DER assets like storage systems, solar PV and becoming more flexible with their load requirements. Such DER assets are a need of time as they can provide various kinds of services to the grid and help in relieving the stress on power system. Also, they create revenue potential for the owner in return for their services. This is possible only if they are operated in a coordinated manner and utilized to their maximum potential. However, it is very difficult for the asset owner to manage their operation when interacting with the markets on his/her own. They do not have the necessary knowledge and the right infrastructure to do so. Hence, they need someone who can facilitate it and create operation schedules of their assets i.e., tell when and for how much time to switch on/off their assets. This is where an aggregator comes into play. The DER assets subscribe to the aggregator with the requirement of explaining them how to operate their assets so as to maximize its utilization and earn revenue. The aggregator has a large number of DER assets subscribed to it. These DER assets are usually located at different nodes in the distribution system, and hence the aggregator must manage all these resources as a group, interact with market and create an optimal operation schedule for all the assets. However, creating an operating schedule of these multiple assets while abiding by the several technical constraints, behavioral preferences and network constraints is a huge technical challenge.

(MENON VISHNU P ET AL: "Modeling Uncertainty of Day-ahead Market Prices for Energy Storage Aggregator"), teaches about two different ways to reduce the impact of market price uncertainty on the profit: (a) Using the Conditional Value-at-Risk, and (b) Using Robust Optimization techniques.

(YANG CHANGHAI ET AL: "Optimal Scheduling Strategy of Demand Response Aggregators Considering Customers' Complicated Response Characteristic") teaches that based on the historical demand response data, customers' typical response curves are obtained through the clustering method, and the probability distribution function is used to describe the customers' response probability. An optimal scheduling strategy model is then established for a DR aggregator who manages different types of residential customers and energy storage (ES) units.

(OLIVARES DANIEL E ET AL: "A Centralized Energy Management System for Isolated Microgrids") teaches about the mathematical formulation of the microgrid's energy management problem and its implementation in a centralized Energy Management System (EMS) for isolated microgrids.

SUMMARY

The invention is set out in the appended set of claims 1-15.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 depicts an exemplary system for generating optimal intraday bids and operating schedules for distributed energy resources, in accordance with an embodiment of the present disclosure.
FIG. 2 depicts an exemplary flow chart illustrating a method for generating optimal intraday bids and operating schedules for distributed energy resources, using the system of FIG. 1, in accordance with an embodiment of the present disclosure.

FIG. 3 illustrates an exemplary IEEE 13 bus radial distribution network as implemented by the system of FIG. 1, in accordance with an embodiment of the present disclosure.

FIG. 4 depicts various bidding timelines in intraday markets, in accordance with an embodiment of the present disclosure.

FIGS. 5A through 5D depict a histogram of two-dimensional (2D) distributions for some of delivery hours at different trading hours, in accordance with an embodiment of the present disclosure.

FIG. 6 depicts an exemplary flow chart illustrating a method for executing the optimization model (or a non-linear programming problem), using the systems of FIG. 1, in accordance with an embodiment of the present disclosure.

FIG. 7 depicts a graphical representation illustrating a comparison of revenue earned by a baseline trading technique (ID3) and the method of the present disclosure trading techniques across individual days, in accordance with an embodiment of the present disclosure.

FIG. 8A depicts a heatmap of buy bids placed by the baseline trading technique (ID3) over a sample day (day 3), in accordance with an embodiment of the present disclosure.

FIG. 8B depicts a heatmap of buy bids placed by the method of the present disclosure trading techniques over a sample day (day 3), in accordance with an embodiment of the present disclosure.

FIG. 9A depicts a graphical representation of a performance of the baseline trading technique (ID3) and the method of the present disclosure under a higher generation (twice the solar panel sizes with all other parameters remaining the same), in accordance with an embodiment of the present disclosure.

FIG. 9B depicts a graphical representation of a performance of the method along with the baseline trading technique for a period June 2020, in accordance with an embodiment of the present disclosure.

FIG. 9C depicts a graphical representation of a performance of the method along with the baseline trading technique (ID3 - conventional approach) on a set of 250 DERs, in accordance with an embodiment of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Power systems are undergoing significant changes due to increasing penetration of Distributed Energy Resources (DERs) such as solar, wind farms, electric vehicles, energy storage systems and flexible demand. These DERs are usually owned by end users connected to low and medium voltage distribution networks. Unlike traditional centralized generators, these DERs have smaller capacities. However, due to their large numbers and flexible nature, these DERs can inject clean energy and provide valuable services to the grid. Nevertheless, an uncontrolled and a disorderly inclusion of DERs can make it harder for system operators to keep the grid running.

In this context, aggregators are emerging as new players in the power system. An aggregator's goal is to coordinate the DERs and provide services to the power system through appropriate markets while earning revenue. In such a set-up, aggregators are expected to provide the necessary technology to communicate and control the DERs. Aggregators improve the economic efficiency of the power system by enhancing the existing grid's robustness with little investment. Simultaneously, they also create private value by allowing their subscribers to earn revenue through market participation. It is economically inefficient for DERs to participate individually in markets by themselves due to the high transaction costs and low individual capacities.

Given this strong business case for aggregation, a plethora of work has been done to address the research challenges involved. In one of the research works, an optimization framework for an aggregator of flexible loads participating in Nordic markets has been discussed (e.g., refer Aleksandra Roosa, Stig Ø. Ottesenb, and Torjus F. Bolkesjoa. 2014. Modeling consumer flexibility of an aggregator participating in the wholesale power market and the regulation capacity market. In Renewable Energy Research Conference. Oslo, Norway). The relationship between aggregator-storage units and effect of aggregator on system welfare is also discussed (e.g., J. E. Contreras-Ocaña, M. A. Ortega-Vazquez, and B. Zhang. 2019. Participation of an Energy Storage Aggregator in Electricity Markets. IEEE Transactions on Smart Grid 10, 2 (2019), 1171-1183.).

Certain works considered participation of DERs in single markets such as day-ahead or flexibility while others consider simultaneous participation of DERs in multiple markets such as energy, regulation, and reserve. There are also works that describe how DERs can be controlled to provide other services for the network such as voltage regulation.

The uncertainties associated with the DERs are higher than the conventional loads and generation sources. Therefore, these are better suited for markets that operate with short lead times. While one may consider ancillary services market or real time markets to be a good avenue for DERs to participate, such markets are not fully governed by economics. These are rather driven by system conditions prevailing in the time window when the services are asked for. Therefore, such markets provide little room for the DER aggregator to play with. DERs are ideally suited for economics driven markets with a trading horizon shorter than day-ahead markets and longer than real-time markets. There is a class of electricity markets called "short-term" or "intraday" markets which operate in this time range.

On the other hand, intraday markets support continuous trades (similar to stock markets) and follow pay-as-you-bid market clearing. Also, these markets allow for a bid (buy or sell) to be partially cleared in a single transaction. The uncleared volume may get cleared in subsequent transactions. Consequently, the clearing prices in intraday markets exhibit more volatility - for the same delivery slot, the market clearing price could change depending on when the trade happens. This increases the complexity of doing trades optimally in intraday markets.

There has been some research that focuses on DERs trading in intraday markets, either exclusively or in combination with other markets. These works aim to either reduce the cost of energy procurement or maximize the revenue generated through trading.

Given the importance of DERs and aggregation, considerable research on this topic exists in literature. For instance, Vaya et. al., (e.g., refer "Marina González Vayá and Göran Andersson. 2014. Optimal bidding strategy of a plug-in electric vehicle aggregator in day-ahead electricity markets under uncertainty. IEEE transactions on power systems 30, 5 (2014), 2375-2385.") discuss a model for aggregator of electric vehicles (EVs) participating as a buyer in a day ahead electricity market. Here, the aggregator is considered as a price maker and the problem is formulated as a bilevel optimization problem. Khajeh et.al., (refer "Hosna Khajeh, Asghar Akbari Foroud, and Hooman Firoozi. 2019. Robust bidding strategies and scheduling of a price-maker microgrid aggregator participating in a pool-based electricity market. IET Generation, Transmission & Distribution 13, 4 (2019), 468-477.") proposed a model for a microgrid aggregator with 'price-maker' bidding strategies in a pool market. The uncertainties in renewable generation are modeled in a robust optimization framework. Somma et. al., (e.g., "Marialaura Di Somma, Giorgio Graditi, and Pierluigi Siano. 2018. Optimal bidding strategy for a DER aggregator in the day-ahead market in the presence of demand flexibility. IEEE Transactions on Industrial Electronics 66, 2 (2018), 1509-1519.") presented a model for an aggregator utilizing demand flexibility for trading in day-ahead markets. Uncertainties in the DER generation and the market prices are considered in a stochastic mixed-integer linear programming framework. Bessa et. al. (e.g., refer "Ricardo J Bessa, Manuel A Matos, Filipe Joel Soares, and João A Peças Lopes. 2012. Optimized bidding of a EV aggregation agent in the electricity market. IEEE Transactions on Smart Grid 3, 1 (2012), 443-452.") discussed a bidding model for EV aggregator participating in the day-ahead and reserve markets. Their model focused on the higher flexibility and variability of EV as compared to the conventional loads. In Han et. al. (e.g., refer "Bing Han, Shaofeng Lu, Fei Xue, and Lin Jiang. 2019. Day-ahead electric vehicle aggregator bidding strategy using stochastic programming in an uncertain reserve market. IET Generation, Transmission & Distribution 13, 12 (2019), 2517-2525.") a model was presented for EV aggregator which jointly optimizes bidding strategy for reserve capacity in day-ahead market and reserve deployments in real-time markets while considering the market uncertainties. Iria et.al. (e.g., refer "José Iria, Filipe Soares, and Manuel Matos. 2019. Optimal bidding strategy for an aggregator of prosumers in energy and secondary reserve markets. Applied Energy 238 (2019), 1361-1372.") proposed a stochastic optimization model for an aggregator optimizing prosumers' flexibility and minimizing the net cost of buy and sell in day-ahead and real time market. Valsomatzis et. al., (e.g., refer "Emmanouil Valsomatzis, Torben Bach Pedersen, and Alberto Abello. 2018. Day-Ahead Trading of Aggregated Energy Flexibility. In Proceedings of the Ninth International Conference on Future Energy Systems (Karlsruhe, Germany) (e-Energy' 18). Association for Computing Machinery, New York, NY, USA, 134-138.") discussed a strategy to trade the flexibility offered by EVs in European day-ahead flex markets. Dannel et. al. (e.g., refer "Dominik Danner, Jan Seidemann, Michael Lechl, and Hermann de Meer. 2021. Flexibility Disaggregation under Forecast Conditions. In Proceedings of the Twelfth ACM International Conference on Future Energy Systems (Virtual Event, Italy) (e-Energy '21). Association for Computing Machinery, New York, NY, USA, 27-38.") proposed a strategy to forecast the flexibility potential of heterogeneous DERs. They also present a method for dispatching the network's flexibility requirement among the participating DER groups. Attarha et. al., (e.g., refer "Ahmad Attarha, Paul Scott, and Sylvie Thiébaux. 2020. Network-Aware Participation of Aggregators in NEM Energy and FCAS Markets. In Proceedings of the Eleventh ACM International Conference on Future Energy Systems (Virtual Event, Australia) (e-Energy '20). Association for Computing Machinery, New York, NY, USA, 14-24.") proposed a strategy for aggregators to participate in both energy and frequency control ancillary service markets. They modeled the inter-dependencies in simultaneous market participation and also factored in the constraints placed by the network.

In regard to DERs and intraday markets, Bouskas et. al., (e.g., refer "Ioannis Boukas, Damien Ernst, Thibaut Théate, Adrien Bolland, Alexandre Huynen, Martin Buchwald, Christelle Wynants, and Bertrand Cornélusse. 2021. A deep reinforcement learning framework for continuous intraday market bidding. Machine Learning (2021), 1-53.") discussed a strategy for a grid connected storage to trade in intraday markets using a deep reinforcement learning framework. They model the trading problem as a Markov Decision Process and present an asynchronous distributed version of the fitted Q iteration algorithm. There are also approaches that use stochastic differential equations to derive optimal trading strategies for renewable generators (e.g., refer "R Aid, P. Gruet, and H Pham. 2016. An optimal trading problem in intraday electricity markets. Financial Economics 10, 1 (2016), 49-85."). Limmer et. al., (e.g., refer "Ilham Naharudinsyah and Steffen Limmer. 2018. Optimal Charging of Electric Vehicles with Trading on the Intraday Electricity Market. Energies 11, 6 (2018)") proposed a strategy to charge EVs optimally by trading in the intraday markets. They also assume that a retailer is available as a fall-back source to supply the required electricity during times of need. Sanchez et. al., (e.g., refer "Pedro Sánchez-Martín, Sara Lumbreras, and Antonio Alberdi-Alén. 2016. Stochastic Programming Applied to EV Charging Points for Energy and Reserve Service Markets. IEEE Transactions on Power Systems 31, 1 (2016), 198-205.") proposed a strategy for EVs to trade in both day-ahead and intraday markets. In the first stage, EVs trade in the day-ahead market based on the forecasts while in the second stage, they trade in the intraday market to account for deviations in the forecast. Jacobsen et. al., (e.g., refer "Christoph Goebel and Hans-Amo Jacobsen. 2016. Aggregator-Controlled EV Charging in Pay-as-Bid Reserve Markets with Strict Delivery Constraints. IEEE Transactions on Power Systems 31, 6 (2016), 4447-4461.") discussed a technique for EVs to participate in both regulation and intraday markets. However, the electricity costs are not optimized since the required energy is bought late irrespective of the prices. A common feature in all the aforesaid works is that they assume homogeneity in the DER population (i.e., the solution is targeted for a specific DER type). Hence, they cannot be applied in a heterogeneous DER setting.

Ayon et.al., (e.g., refer "Xiaolin Ayon, Maria Angeles Moreno, and Julio Usaola. 2017. Aggregators' Optimal Bidding Strategy in Sequential Day-Ahead and Intraday Electricity Spot Markets. Energies 10, 4 (2017).") proposed a probabilistic optimization method that produces optimal bidding curves to be submitted by an aggregator to the day-ahead electricity market and the intraday market in a sequential manner. Their formulation entails different linear optimization problems that follow the natural temporal sequence of day-ahead and intraday markets. The overall trade optimization is performed in three steps: First, the optimal bidding curves are produced and submitted to the day-ahead market; Second, after the day-ahead market clearing, temporal constraints related to the flexible consumption are fulfilled through a rescheduling process; and finally, new optimal bidding curves are produced and submitted to the intraday market, trying to take advantage of the lower lead time and the knowledge gained on the marginal prices through the day-ahead market clearing. While this work models heterogeneous DERs, they do not take into consideration the constraints that may be placed by the network. Further, they also assume that different price scenarios to be equiprobable which may not be true.

While all the above research works are notable contributions, they possess one or more of the following gaps: (i) They assume only one type of DER such as storage or EVs. Heterogeneity in the nature of DERs is not considered. (ii) They do not model the continuous price fluctuations in the market. They assume the clearing price to remain constant over certain duration, which is hardly the case. (iii) They do not model constraints placed by the network operator for injecting or withdrawing power at network buses. (iv) They do not provision for energy exchanges to happen within the DER pool managed by an aggregator.

In the present disclosure, system and method described herein determine an optimal intraday operating schedule and intraday bids for aggregators managing a set of DERs (e.g., (both energy resources that are homogeneous and heterogeneous in nature). In particular, system and method of the present disclosure model a joint price-volume dynamics present in intraday markets, wherein such modeling of the joint price-volume dynamics allows for the trades/bids placed earlier to be corrected based on the revised forecasts of demand and generation while allowing for energy exchanges within the DER pool.

More specifically, the system and method of the present disclosure (i) model the price volume behavior in intraday markets as a two-dimensional (2D) distribution which is obtained using at least historical market logs, wherein the forecasted (2D) distribution is used to optimize the intraday bids placed by the aggregator in the intraday energy market(s), and (ii) model the optimal bidding problem of aggregators in an intraday market as a (potentially non-convex) MINLP and a relaxation wherein the integer variables from the formulation are removed and the MINLP problem is converted to an NLP problem.

Present disclosure provides systems and methods to determine/generating an optimal strategy (e.g., optimal intraday operating schedule and intraday bid) for aggregators managing DERs (both energy resources that are homogeneous and heterogeneous in nature) to trade in intraday markets. The system and method of the present disclosure model the joint price-volume dynamics present in such markets through a two-dimensional (2D) distribution (e.g., histograms, and the like) and use it in decision making. The above method of the present disclosure also allows for the trades/bids placed earlier to be corrected based on the revised forecasts of demand and generation in the DER pool. The system and method of the present disclosure model the optimal bidding problem of aggregators in an intraday market as a mixed-integer non-linear programming (MINLP) problem. More specifically, the present disclosure presents a reformulation of the problem which leverage different aspects of the problem's structure. The relaxation converts the MINLP to an NLP problem. Furthermore, the system and method test the performance against commonly used approaches. In this regard, the system and method of the present disclosure have used real world intraday market logs from a specific region/country in the experiments. The results indicated that the relaxation mentioned above improves the revenue performance of the aggregator by 19% relative to the commonly followed trading practices. Also, the performance gap between the baseline and the method implemented by the present disclosure remains robust to changes in subscriber generation volumes. Further, it is also observed by the present disclosure that enabling pool interactions within the DER set is helpful. Based on the observations, such enabling improves the revenue performance of aggregator by 2.5%.

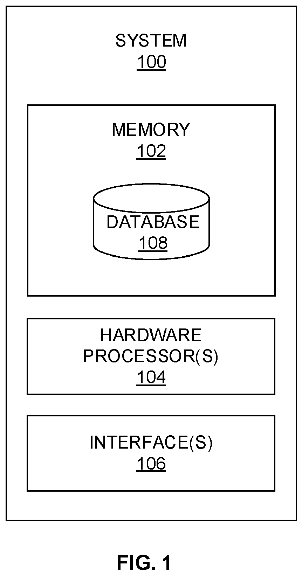

Referring now to the drawings, and more particularly to FIG. 1 through 9C, where similar reference characters denote corresponding features consistently throughout the figures, there are shown preferred embodiments and these embodiments are described in the context of the following exemplary system and/or method.

FIG. 1 depicts an exemplary system 100 for generating optimal intraday bids and operating schedules for distributed energy resources, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises (i) historical data pertaining to generation and demand of energy by a plurality of distributed energy resources (DERs) connected to a network specific to an aggregator, (ii) historical intraday market data, (iii) a specification of the plurality of distributed energy resources (DERs) connected to the network specific to the aggregator, (iv) a preference of one or more subscribers, and (v) information associated with the network specific to the aggregator. The database 108 further comprises various models, such as optimization model(s), intraday market clearing model(s), and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

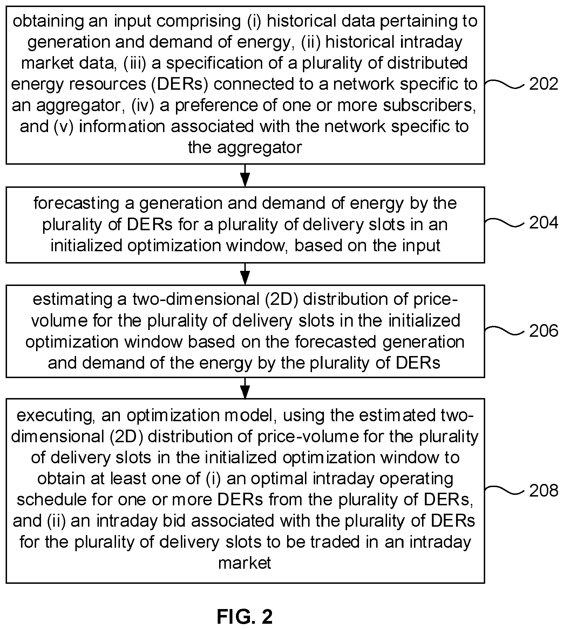

FIG. 2, with reference to FIG. 1, depicts an exemplary flow chart illustrating a method for generating optimal intraday bids and operating schedules for distributed energy resources, using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, and the flow diagram as depicted in FIG. 2.

The system and method of the present disclosure consider a centralized set-up wherein an aggregator orchestrates the operations of a set of DERs. The system 100 assumes that the aggregator has the knowledge of the characteristics (size, ratings, constraints, and preferences) of the participating DERs. A subscriber $s$ can have a generation source (e.g., solar PV), demand, energy storage systems (e.g., battery) or any combination of these. The aggregator has the ability to forecast the renewable generation and overall demand of its subscribers using historical logs and other pertinent information.

A subscriber $s$ has two kinds of demands: fixed demand, $d_{t,s}^{fix}$, and flexible demand, $d_{t,s}^{flex}$. As the name indicates, fixed demand is that part of the customer load that remains fixed and must be supplied at the specified time $t$. Flexible demand is that part of the customer load where there is flexibility in terms of the time(s) at which this demand can be satisfied. While the quantum of flexible demand is decided by the customer, its schedule is decided by the aggregator. The aggregator can split a customer's overall demand into flexible and fixed components by leveraging information about customer's appliance set and operational preferences (which can be periodically collected).

With the knowledge of customer preferences, demands, asset constraints, and the generation availability, an aggregator participates in an intraday market. Market participation is for both procuring and selling power. Aggregator places the bids in a such a way that the revenue obtained through market participation is maximized. The aggregator also schedules the operations of the individual DERs based on the cleared market commitments.

Intraday markets for electricity are also referred as continuous markets as the trading happens in continuous time slots until the trade window closure. Trading in these markets typically starts after the day-ahead market clearing. In intraday markets, the bids for a given delivery time can be placed anywhere from the previous afternoon to few minutes before the delivery. The exact gate opening and closing times varies across geographies. Different exchanges offer varying products that range from simple products (which are limited to one time slot) to block products (which span multiple continuous time slots). In the present disclosure, the system and method assume that the aggregator is interested in simple one slot energy product.

Intraday markets typically follow pay-as-bid pricing for bid clearing and the system and method further assume the same clearing model. Under this clearing model, the market operator matches an incoming bid order with the best opposite order as soon as it is submitted. If there is no suitable match, the incoming order stays in the order book until its expiry condition. The best opposite order is defined as the highest priced buy order or lowest priced sell order. If the best opposite order matches with the price condition of an incoming order, a transaction happens. An order can get fulfilled either completely or partially. If an order is cleared partially, the remaining quantity stays in the order book.

Referring to steps of FIG. 2, at step 202 of the method of the present disclosure, the one or more hardware processors 104 obtain an input comprising (i) historical data pertaining to generation and demand of energy by a plurality of distributed energy resources (DERs) connected to a network specific to an aggregator, (ii) historical intraday market data, (iii) a specification of the plurality of distributed energy resources (DERs), (iv) a preference of one or more subscribers, and (v) information associated with the network specific to the aggregator. The plurality of DERs connected to the network of the aggregator may be identical in nature (e.g., homogeneous DERs or networks of a single DER type, say only batteries, only solar photovoltaic cells, only flexible load(s) and the like) or similar. The plurality of DERs connected to the network of the aggregator may be different from each other or heterogeneous in nature. For instance, the DERs in the network of the aggregator may include, but are not limited to, batteries, solar photovoltaic cells, flexible load(s), fixed loads, and the like. Below Table 1 and Table 2 illustrate exemplary historical data pertaining to generation and demand of energy by a DER (e.g., say on an hourly basis) respectively.

Table 1

| Generation | | |
|---|---|---|
| Date | Hour | Generation (MW) |
| 1/1/2020 | 5:00 | 0 |
| 1/1/2020 | 6:00 | 12 |
| 1/1/2020 | 7:00 | 23 |

Table 2

| Demand | | |
|---|---|---|
| Date | Hour | Demand (MW) |
| 1/1/2020 | 5:00 | 22 |
| 1/1/2020 | 6:00 | 36 |
| 1/1/2020 | 7:00 | 43 |

Below Table 3 illustrates historical intraday market data consisting of price-volume pairs bid at different transaction hours for each delivery hour.

Table 3

| Date | Transaction time | Delivery Hours | Volume (MW) | Price (EUR) |
|---|---|---|---|---|
| 1/1/2020 | 9:05 | 14:00 | 10 | 33.2 |
| 1/1/2020 | 10:22 | 14:00 | 30 | 34.99 |
| 1/1/2020 | 12:35 | 15:00 | 5 | 30.1 |

Below Table 4 illustrates various examples of DERs connected to the network of the aggregator.

Table 4

| Type | Description of DER | Number of DERs | Average Size (KW) |
|---|---|---|---|
| I | Fixed and flexible demand | 6 | 300; 50 |
| II | Fixed + flexible demand with Solar | 4 | 400; 350; 2300 |
| III | Fixed + flexible demand with Storage | 7 | 400; 400; 2650 |
| IV | Solar with Storage | 5 | 1690 and 2480 |
| V | Fixed/flexible demand with Solar & Storage | 4 | 600, 330; 2000; 3300 |

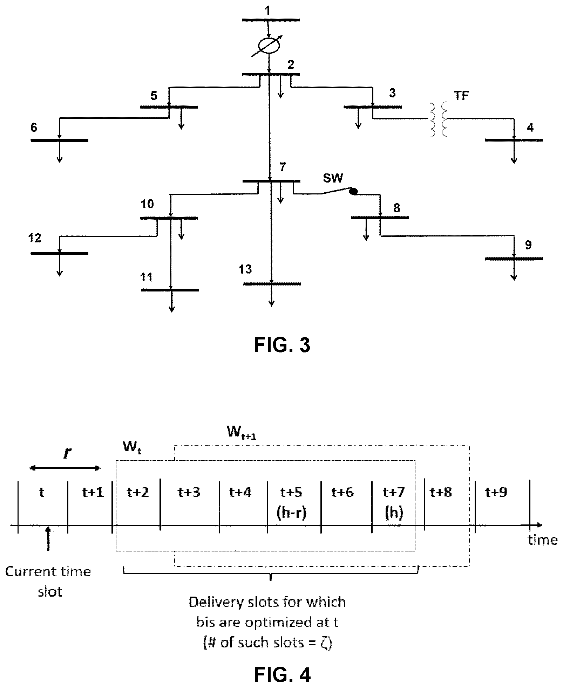

The preference of the one or more subscribers corresponds (or pertains) to the availability of the battery and flexible demand which is communicated on a day ahead basis to the aggregator. The distribution network used in the model is shown in FIG. 3. More specifically, FIG. 3, with reference to FIGS. 1-2, illustrates an exemplary IEEE 13 bus radial distribution network as implemented by the system 100 of FIG. 1, in accordance with an embodiment of the present disclosure. The network information includes, but is not limited to, maximum and minimum import power limits of each node in the network. Below Table 5 illustrates information pertaining to the network:

Table 5

| Node | Import Limit (MW) | Export Limit (MW) |
|---|---|---|
| 1 | 1250 | 1250 |
| 2 | 251 | 251 |
| ... | ... | ... |
| 13 | 543 | 470 |

At step 204 of the method of the present disclosure, the one or more hardware processors 104 forecast a generation and demand of energy by the plurality of DERs for a plurality of delivery slots in an initialized optimization window, based on the input.

Without loss of generality, the system and method consider time to be slotted. Given a delivery slot of $h$, let the aggregator's trading window be the sequence of $\tau$ consecutive slots from $h - \tau - r$ till $h - r$, where $r$ is the minimum lead time allowed by the market operator. The aim of the optimal trading strategy is to answer the following questions: (1) Given a delivery time slot $h$ and a trading slot $t \in [h - \tau - r, h - r]$, determine the volume of the buy or sell bids the aggregator has to place in the market at $t$ for $h$. (2) Determine the price for the buy or sell bids the aggregator has to be place in the market at $t$ for $h$. (3) The volumes and prices have to be determined such that the revenue earned by the aggregator is maximized and the demand requirements of the DERs in the aggregator's subscriber pool are met.

Moving window optimization: Notations used in the present disclosure are summarized in below Table 6.

Table 6

| Symbol | Description |
|---|---|
| $h$ | Time slot at which power/energy should be delivered |
| $t$ | Current time slot |
| $r$ | Minimum lead time for trading allowed by market operator |
| $\tau$ | Window of time slots over which the aggregator trades for $h$ |
| $s$ | Subscriber index |
| $N$ | Set of nodes in a distribution network |
| $S_n$ | Set of DERs connected at bus $n$ |
| $S$ | Set of all subscribers of the aggregator |

(continued)

| Symbol | Description |
|---|---|
| $W^t$ | The window of optimization - the range of $h$ values for which the aggregator optimizes the bids at $t$; given by $[t + r, t + r + \tau]$ |
| $d_{h,s}^{fix}$ | Fixed demand of subscriber $s$ for $h$ as forecasted at $t$ |
| $G_{h,s}$ | Generation of subscriber $s$ for delivery slot $h$ as forecasted at $t$ |
| $Lim_n$ | Import/export limit at node $n$ for the aggregator that has been determined by the network operator. The operator communicates this limit to the aggregator at least $\tau$ slots before $h$. |
| $R_s^{chg}(.)$ and $R_s^{dsg}(.)$ | Function that specifies the maximum charge/discharge rate of battery available with subscriber s as per the SOC. |
| $P_h^L$ and $P_h^H$ | Lower and Higher limit of market price for delivery slot $h$ |
| $M$ and $k$ | Large positive numbers |
| $x_{h,n}$ | Net energy at node $n$ during $h$ that is traded in the market |
| pool $x_{h,n}^{pool}$ | Net energy at node $n$ during $h$ that is traded within the pool |
| $x_h^{tot}$ | Total aggregated volume which has to be traded with market |
| $b_{h,s}^{chg}, b_{h,s}^{dsg}$ | Charging and Discharging volume of subscriber s's battery during $h$. |
| $d_{h,s}^{flex}$ | Subscriber s's flexible demand scheduled during $h$. |
| $SOC_{h,s}$ | State of charge of battery with subscriber $s$ during hour $h$ |
| $SOC_s^{min}, SOC_s^{max}$ | Maximum and minimum limits of the state of charge of the battery available with $s$ |
| $Z_{t,s}$ | Binary variable indicating the status of battery operation during $t$ (1=charging, 0=discharging) |
| $\delta_h$ | Binary variable indicating whether the aggregator will place sell offer or buy bid at $h$ (1 = sell and 0 = buy) |
| $Qb_h^{clear}, Qs_h^{clear}$ | Present value of aggregator's sell and buy volume for $h$ that has been cleared in the market. |
| $qs_h, ps_h$ | Sell offer volume and price for the aggregator during $h$ |
| $qb_h, pb_h$ | Buy bid volume and price for the aggregator during $h$ |
| $f^{t,h}(p, q)$ | Relative fraction of bids with price $p$ and volume $q$ found in the historical cleared market transactions at $t$ for delivery slot $h$. |
| $F_{sell}^{t,h}(p,q)$, $F_{buy}^{t,h}(p,q)$ | A measure of market's propensity to clear sell and buy bids respectively at $t$ for delivery slot $h$. |

Let $S$ be the set of DERs who have subscribed to the services of an aggregator. Let these DERs be connected to the distribution network across $N$ different buses with $S_n$ denoting the set of DERs connected at bus $n$. Let the current (trading) time be $t$. The range of delivery slots for which the aggregator can optimize the bids at $t$ is given by $[t + r, t + r + \tau]$. The system and method refer to this range of $h$ values as the optimization window $W^t$. As $t$ advances, so does $W^t$. The aggregator can place its first bid for delivery slot $h$ at $t = h - \tau - r$ based on the forecasts available at $t$ about the generations and demands in its DER pool at $h$. This bid can be revised by the aggregator in the time slots $t = h - \tau + 1 - r$ to $h - r$ using the updated forecast values available in these time slots about the generations and demands at $h$. In the present disclosure, the system and method implement a forecasting model (not shown in FIGS. - but comprised in the memory 102 and executed to perform steps described herein) for generation and demand of each DER. The forecasting model(s) is/are trained using the corresponding historical input data. The trained model(s) is/are used to forecast the generation and demand of all delivery hours in the initialized optimization window. In the present disclosure, the system and method implemented as a stacked LSTM network" model which served as the forecasting model. The various timelines involved in the bidding process are shown in FIG. 4. FIG. 4, with reference to FIGS. 1 through 3, depicts various bidding timelines in intraday markets, in accordance with an embodiment of the present disclosure.

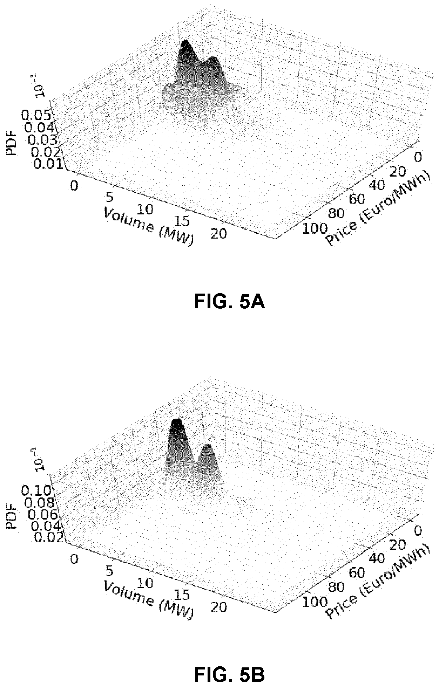

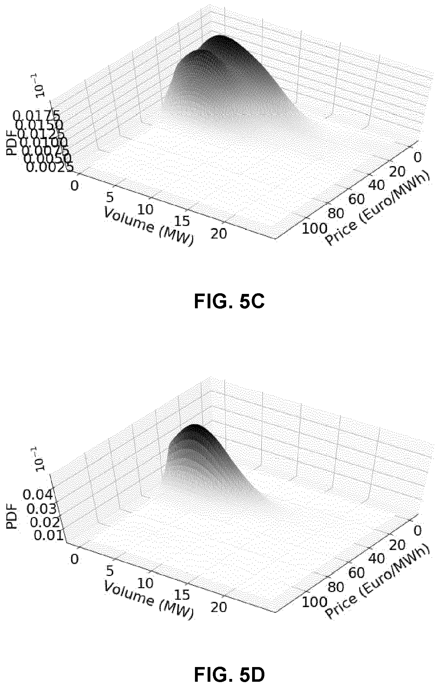

At step 206 of the method of the present disclosure, the one or more hardware processors 104 estimate a two-dimensional (2D) distribution of price-volume for the plurality of delivery slots in the initialized optimization window based on the forecasted generation and demand of the energy by the plurality of DERs. The historical intraday market data is used to estimate the 2D distribution of price-volume for all the delivery slots/hours in the optimization window. This estimation is done by closest fitting of the non-linear 2D function. 2D distributions for some of delivery hours at different trading hours are shown in FIGS. 5A through 5D. FIGS. 5A through 5D, with reference to FIGS. 1 through 4, depict a histogram of 2D distributions for some of delivery hours at different trading hours, in accordance with an embodiment of the present disclosure. More specifically, FIGS. 5A through 5D depict a histogram illustrating cleared price-volume for $h = 7$ and $h = 23$ for two trading slots, in accordance with an embodiment of the present disclosure.

At step 208 of the method of the present disclosure, the one or more hardware processors 104 execute, an optimization model, using the estimated two-dimensional (2D) distribution of price-volume for the plurality of delivery slots in the initialized optimization window to obtain at least one of (i) an optimal intraday operating schedule for one or more DERs from the plurality of DERs, and (ii) an intraday bid associated with the plurality of DERs for the plurality of delivery slots to be traded in an intraday market. The optimal intraday operating schedule for the one or more DERs is extracted values of the variables such as $G_{h,s}$, $d_{h,s}^{flex}$, $d_{h,s}^{fix}$, and $r_{h,s}$ obtained after completing the execution of the NLP problem. Similar, the intraday bids include, but are not limited to, extracted values of the variables such as but $ps_h$, $qs_h$, $pb_h$, and $qb_h$ obtained after completing the execution of the NLP problem.

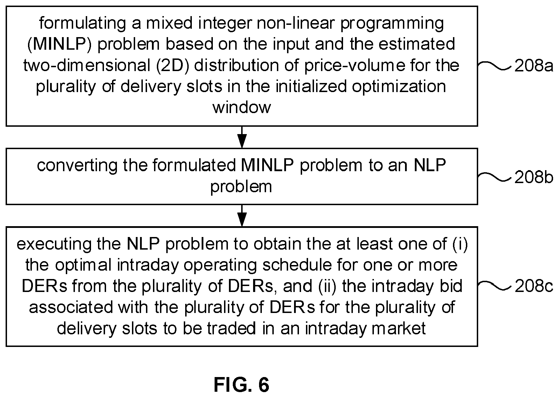

Execution of the optimization model comprises various steps being carried out by the system. FIG. 6, with reference to FIGS. 1 through 5D, depicts an exemplary flow chart illustrating a method for executing the optimization model (or a non-linear programming problem), using the systems of FIG. 1, in accordance with an embodiment of the present disclosure. For instance, at step 208a of the method of the present disclosure, the one or more hardware processors 104 formulate a mixed integer non-linear programming (MINLP) problem based on the input and the estimated two-dimensional (2D) distribution of price-volume for the plurality of delivery slots in the initialized optimization window. At step 208b of the method of the present disclosure, the one or more hardware processors 104 convert the formulated MINLP problem to an NLP problem. At step 208c of the method of the present disclosure, the one or more hardware processors 104 execute (or solve) the NLP problem to obtain the at least one of (i) the optimal intraday operating schedule for one or more DERs from the plurality of DERs, and (ii) the intraday bid associated with the plurality of DERs for the plurality of delivery slots to be traded in an intraday market. The NLP problem is obtained by relaxing at least one (i) a first integer variable, and (ii) a second integer variable comprised in the MINLP. The first integer variable is based on a decision of a type of the intraday bid (e.g., either to sell generated energy/power or buy energy (or demand). The second integer variable is based on a constraint specific to a DER type (e.g., charging and discharging rates and levels of batteries). The intraday bid comprises a decision to place a buy bid or a sell bid and a corresponding price-volume pair for each delivery slot pertaining to one or more DERs. For instance, for each hour delivery slot, the aggregator must decide to place a buy or sell bid based on the aggregate power ( $x_h^{tot}$ ) in that slot. If $x_h^{tot} > 0$, it means the aggregator has surplus generation and it needs to place a sell bid. If $x_h^{tot} < 0$, it indicates that the aggregator has excess demand, and it needs to place a buy bid. The constraints (equations (10) through (17) for MINLP problem and equations (10), (17), (21), and (22) for NLP model) govern this decision. Below Table 7 illustrates intraday bid obtained as an output from the execution of the optimization model.

Table 7

| Delivery hour | $x_h^{tot}$ | Sell bid | | Buy bid | |
|---|---|---|---|---|---|
| | | Price (Euro) | Volume (MW) | Price (Euro) | Volume (MW) |
| 6:00 | 0.49 | - | - | 9.10 | 0.49 |
| 7:00 | 0.61 | - | - | 7.34 | 0.61 |
| 8:00 | 0.36 | 19.94 | 0.36 | - | - |
| 9:00 | 0.29 | 19.42 | 0.29 | - | - |

The optimal intraday operating schedule for a first DER type (e.g., say battery) comprises at least one of (i) whether to charge or discharge in each delivery slot of the initialized optimization window, (ii) a charging level or a discharging level in each delivery slot of the initialized optimization window; and (iii) a state of charge (SOC) value of a DER of the first DER type at an end of each delivery slot. For instance, the first DER type is a battery. The constraints (e.g., equations (1), (4), (5), (6), and (7) for MINLP problem and equations (1), (5), (19), (20) for NLP problem) govern the schedule of this DER type. As battery is a bi-directional in nature, it can export as well as import. A sample optimal schedule of one battery for the initialized optimization window is shown in below Table 8.

Table 8

| Delivery hour | $r$ | SOC |
|---|---|---|
| 6:00 | -15 | 15 |
| 7:00 | 10 | 25 |
| 8:00 | 8 | 33 |
| 9:00 | 2 | 35 |

A positive value of $r$ indicates battery charging whereas negative value of $r$ indicates battery discharging. The absolute value of $r$ is charging/discharging level.

The optimal intraday operating schedule for a second DER type (e.g., say solar photovoltaic or energy or power generators) comprises quantity of energy required to be provided to a power grid in each delivery slot. For instance, say, the second DER type is a solar PV. As it is a pure generation source, the optimal schedule for this DER type is a net power that is exported to the power grid. A sample operating schedule of a solar PV is shown in below Table 9.

Table 9

| Delivery hour | Solar export (kW) |
|---|---|
| 6:00 | 11 |
| 7:00 | 40 |
| 8:00 | 83 |
| 9:00 | 101 |

The optimal intraday operating schedule for a third DER type comprises information pertaining to scheduling of an operation of an electrical load (e.g., such as flexible load or flexible demand) at one or more delivery slots. For instance, the third DER type is the flexible load. Here the aggregator knows the total flexible load, but the aggregator has to decide in which delivery hours to schedule the flexible load such that its operating cost is minimum. The constraints (e.g., equations (1), (8), and (9)) govern the schedule of this DER type. A sample schedule of a flexible load DER is shown in below Table 10.

Table 10

| Delivery hour | Flexible load (KW) |
|---|---|
| 6:00 | 12 |
| 7:00 | 13 |

(continued)

| Delivery hour | Flexible load (KW) |
|---|---|
| 8:00 | 0 |
| 9:00 | 0 |

Examples of fixed and flexible load(s), include, but are not limited to residential (or commercial) air conditioners, water heaters, refrigerators, commercial HVAC (Heating, ventilation, and air conditioning) systems, pumps for irrigation, pool cleaning or heating, appliances to be scheduled for operation in office buildings, houses, and the like.

The steps 208a through 208c are better understood by way of following description:

Market and pool trading: For a delivery hour $h$, the generation available with the aggregator at a node $n$ is equal to the sum of the battery discharge volumes ( $b_{h,s}^{dsg}$ ) and local generation ($G_{h,s}$) of subscribers under that node. This is represented as the first term in right hand side of equation (1). Similarly, the demand of the aggregator at node $n$ is equal to the sum of battery charging volume ( $b_{h,s}^{chg}$ ), fixed loads of customers attached to $n$ ( $d_{h,s}^{fix}$ ), and flexible loads of customers attached to $n$ that are being scheduled ( $d_{h,s}^{flex}$ ) as reflected in the second term in the right hand side of equation (1) below.

$$x_{h,n} + x_{h,n}^{pool} = \sum_{s \in S_n} \left( G_{h,s} + b_{h,s}^{dsg} \right) - \left( d_{t,s}^{fix} + d_{h,s}^{flex} + b_{h,s}^{chg} \right) \qquad \forall n \in N, \forall h \in W^t$$

$$(1)$$

The net amount of energy exchanged at a node is split between market ($x_{h,n}$) and pool ( $x_{h,n}^{pool}$ ) components as in equation (1). Positive values of $x_{h,n}$ and $x_{h,n}^{pool}$ indicate that excess power is either exported to the markets or used to meet the demands of its own subscriber pool across nodes. Similarly, negative values $x_{h,n}$ and $x_{h,n}^{pool}$ indicate that the demand is met either through market imports or from the generation of other subscribers in the pool. Market exports increase the revenue earned by the aggregator while pool exports decrease the revenue outflow. The converse holds for market and pool imports. The underlying assumption is that there could be asymmetry between the successful market clearing of a sell bid and a buy bid with the same price and volume values. Equation 2 balances the power exchange occurring within the pool i.e., the total power exported onto the pool should always be equal to the power imported into the pool.

$$\sum_{x \in N} x_{h,n}^{pool} = 0 \, , \forall h \qquad (2)$$

Network and battery constraints: The amount of power that can be injected by the DERs into the network could be limited by the hosting capacity and other operational limits of the network. Such limits are assumed to be communicated by the network operator to the aggregators at least $\tau$ slots in advance. Equation (3) enforces the nodal limits set by the network operator on the aggregator.

$$\left| x_{h,n} + x_{h,n}^{pool} \right| \leq Lim_n, \forall n \in N \qquad (3)$$

Equations (4), and (5) enforce the relationship between the state of charge (SOC) and charge/discharge volumes of batteries available with subscribers.

$$SOC_{h,s} = SOC_{h-1,s} + b_{h,s}^{chg} - b_{h,s}^{dsg}, \forall h \in W^t, \forall s \in S \qquad (4)$$

$$SOC_s^{min} \leq SOC_{h,s} \leq SOC_s^{max}, \forall h \in W^t, \forall s \in S \qquad (5)$$

It is noted here that the values of $SOC_{t+r-1,s}$ is be determined by the optimal solution discovered in the previous window $W^{t-1}$. Equations (6) and (7) limit the charging/discharging rates of batteries as determined by the battery characteristics. Also, the binary variable $z_{h,s}$ ensures that the battery is either charging or discharging (but not both) in each $h$.

$$b_{h,s}^{chg} \leq z_{h,s} \times R_s^{chg}(SOC_{h-1,s}), \forall h \in W^t, \forall s \in S \qquad (6)$$

$$b_{h,s}^{dsg} \leq (1 - z_{h,s}) \times R_s^{dsg}(SOC_{h-1,s}), \forall h \in W^t, \forall s \in S \qquad (7)$$

Lithium-ion batteries (found in electric vehicles and home electricity storage products) must be charged carefully so as to not trigger any thermal effects that can affect the battery life. Finding optimal strategies to quickly charge Li-ion cells under high efficiency without damaging them is an active area of research. Several methods exist for charging Li-ion batteries such as constant current - constant voltage, multi-step charging, and pulse charging, to name a few. In some of these charging techniques, the time taken to charge from 10% to 20% state of charge (SoC) may not be same as that of charging from 70% to 80% SoC. So, for a given battery size, the maximum (dis)charging rate - $R_s^{chg}()$ and $R_s^{dsg}()$, may depend on the SoC level and could be non-linear.

Demand constraints: Equations (8) and (9) are constraints for scheduling the flexible demands. Equation (8) ensures that the flexible demand scheduled in the entire optimization window is always equal to the expected total flexible demand. Also, the flexible demand scheduled in each slot should be less than the maximum limit allowed in a slot as indicated in equation (9) below:

$$\sum_h d_{h,s}^{flex} = d_s^{totflex}, \forall s \in S \qquad (8)$$

$$0 \leq d_{h,s}^{flex} \leq d_s^{maxflex}, \forall h \in W^t, \forall s \in S \qquad (9)$$

Trade volume revisions: $x_{h,n}$ quantifies the net power available at node $n$ to trade with the market during slot $h$. This volume estimation is being done during time slot t. It is possible that, a similar volume estimation for $h$ was done during the slots $t$ - 1, $t$ - 2,⋯ , $h$ - $\tau$ - $r$. Based on these earlier estimates, buy or sell bids might have been placed in the market during $t$ - 1, $t$ - 2,⋯ , $h$ - $\tau$ - $r$, resulting in prior market commitment for the aggregator. Let $Qb_h^{clear}$ and $Qs_h^{clear}$ $h$ indicate the cumulative quanta of buy and sell commitments made in the market respectively before t for delivery slot h. Given these prior commitments, the total aggregated power available with the aggregator for delivery at $h$ that needs to be traded in the intraday market is defined by equation (10) below:

$$x_h^{tot} = Qb_h^{clear} - Qs_h^{clear} + \sum_{n=1}^N x_{h,n}, \forall h \in W^t \qquad (10)$$

It is observed that equation (10) also allows for revisions to be made in the trade volume based on the latest forecasts available at t about generations and demands in $W^t$. This provision to adjust for the trade volume also supports spill over trades from day-ahead markets. In such cases, the initial values of $Qb_h^{clear}$ and $Qs_h^{clear}$ can be set to the volumes cleared in the day-ahead market.

Buy vs Sell: The total quantity $x_h^{tot}$ can be either positive or negative depending on the states and requirements of the DERs at $h$. If $x_h^{tot}$ is positive, it implies that the aggregator has surplus generation and needs to place sell offers in market. If $x_h^{tot}$ is negative, it means that the aggregator has excess demand and needs to place buy bids in market. This decision is made by the binary variable $\delta_h$ in equation (11).

$$-M(1 - \delta_h) \leq x_h^{tot} \leq M\delta_h, \forall h \in W^t \qquad (11)$$

If $\delta_h$ = 1, the aggregator places sell offers; otherwise, it places buy bids. This is represented in equations (A) and (B) respectively. Also, both these constraints ensure that the aggregator places either buy bids or sell offers but not both.

$$x_h^{tot}\delta_h = qs_h, \forall h \in W^t \qquad (A)$$

$$x_h^{tot}(\delta_h - 1) = qb_h, \forall h \in W^t \qquad (B)$$

The above two constraints are nonlinear in nature. In order to make it easier for solvers to find the solution, the system and method of the present disclosure linearize them.
Constraint A is linearized through equations (12) and (13). Similarly, constraint B is linearized through equations (14), (15), and (16).

$$-M\delta_h \leq qs_h \leq M\delta_h, \forall h \in W^t \qquad (12)$$

$$x_h^{tot} - M(1 - \delta_h) \leq qs_h \leq x_h^{tot} + M(1 - \delta_h), \forall h \in W^t \qquad (13)$$

$$-M(1 - \delta_h) \leq \hat{q}b_h \leq M(1 - \delta_h), \forall h \in W^t \qquad (14)$$

$$x_h^{tot} - M(\delta_h) \leq \hat{q}b_h \leq x_h^{tot} + M\delta_h, \forall h \in W^t \qquad (15)$$

$$qb_h = -\hat{q}b_h, \forall h \in W^t \qquad (16)$$

Equation (17) constrains the buy/sell prices to be within their maximum and minimum limits obtained from the historical data.

$$P_h^L \leq pb_h \leq P_h^H, \forall h \in W^t \qquad (17)$$

Objective function: Given the above relations, the aggregator at time t has to decide the amount of energy to buy (or sell) in the market during $h$. It should also determine the prices of the buy bids and sell offers. The values of these decision variables have to be determined so that the revenue earned by the aggregator through trading is maximized. This is defined by the objective function in equation (18).

$$\max_{p_h, q_h} \sum_{h \in W^t} ps_h qs_h . F_{sell}^{t,h}(p_h, q_h) - \sum_{h \in W^t} pb_h qb_h \left(1 - . F_{sell}^{t,h}(p_h, q_h)\right)$$

$$(18)$$

where $p_h$ = ($ps_h pb_h$) and $q_h$ = ($qs_h qb_h$)
In each slot $t$, the market clears bids corresponding to different delivery slots $h$. Among the bids cleared during *t* for delivery at *h,* let $f^{t,h}(p, q)$ be the relative fraction of bids with price *p* and volume *q* that are found in the historical logs. It is noted that here that $f^{t,h}(p, q)$ captures the market's bid clearing dynamics as a function of bid price and volume. It is clear that $f^{t,h}(p, q)$ does not represent the probability of a < *p, q* > bid getting cleared in the intraday market at *t* for delivery at *h*. This is because $f^{t,h}(p, q)$ is obtained from the cleared market transactions. Rather, this term is the conditional probability of finding a < *p, q* > transaction in the bids cleared at t for delivery at *h.*

The distribution $f^{t,h}(p, q)$, however, divulges the market's relative preference in clearing the bids. The probability of the market fully clearing a sell bid with quantity $q_1$ and price $p_1$ at transaction slot *t* for delivery at *h* increases with $f^{t,h}(p_1, q_1) + f^{t,h}(p_2, q_1) ... + f^{t,h}(p_n, q_1)$ where $p_1 < p_2 < \cdots p_n$ are the historically found bid prices in the cleared logs for (*t, h*). The intuition is here is that if the market can clear a sell bid with volume $q_1$ at some price $p_j$, it can also clear the same volume at a sell price $p_i \le p_j$. Along the same lines, if the market can fully clear a bid with volume $q_j$ at price $p_1$, it can also fully clear a bid with a lower volume, $q_i \le q_j$, at the same price $p_1$. The term

$$F_{sell}^{t,h}(p_1, q_1) = \sum_{p \ge p_1, q \ge q_1} f^{t,h}(p, q)$$ quantifies this market's propensity to fully clear a sell bid ($p_1, q_1$). Therefore, the revenue inflow of the aggregator is weighed by *Fsell* (*p, q*).

Similarly, the probability of the market fully clearing a buy bid with quantity $q_1$ and price $p_1$ at transaction slot *t* for delivery at *h* increases with $$F_{buy}^{t,h}(p, q) = \sum_{p \ge p_1, q \ge q_1} f^{t,h}(p, q)$$ . However, to reduce the purchase cost of the buy bids (and hence the revenue outflow), the optimizer may pick low bid prices. This unfortunately, also reduces the likelihood of such buy bids getting cleared in the market which is needed to meet the shortfalls in generation.

Therefore, the system and method of the present disclosure weigh the purchase cost with $(1 - F_{buy}^{t,h}(p, q))$ to encourage the optimizer (or the optimization model) to not recommend buy bids with very low prices.

The above objective function in equation (18) is maximized subject to the constraints defined in equations (1) through (17). The above optimal trading problem for aggregators in intraday markets is a mixed integer non-linear programming (MINLP) problem. The integer variables get introduced due to the either-or-constraints in the operation of batteries present in the DER pool and the overall buy versus sell decision to be made by the aggregator for delivery slot *h*. Non-linearity gets introduced due to the presence of $F_{buy}^{t,h}(.,.)$ , and $F_{sell}^{t,h}(.,.)$ , multiplication of bi-linear terms with $F_{buy}^{t,h}(.,.)$ , and $F_{sell}^{t,h}(.,.)$ , as well as the battery charging/discharging constraints. Any infeasibility arising due to network constraints can be handled by introducing slack variables for fixed, flexible demand and generation DERs and penalizing them in the objective function appropriately.

Relaxations to MINLP: The optimal trading problem as described herein is an MINLP problem with non-linearities in both the objective function ( $F_{sell}^{t,h}(.,.)$ , and $F_{sell}^{t,h}(.,.)$ ) as well as the constraint terms ( $R_s^{chg}(.)$ And $R_s^{dsg}(.)$ ). The relaxation approximates the integer variables and converts the MINLP to an NLP.

Integer relaxation to convert to an NLP: The integer variables get introduced in the formulation at two places. The first occurrence is due to the constraint that battery can either charge or discharge (but not both) during any given time slot - this is enforced by the binary variable $z_{h,s}$ in equations (6) and (7). The second occurrence is due to the constraint that the aggregator can either buy or sell at a given delivery slot but not both - this is enforced by the binary variable $\delta_h$ in equations (11), (A), and (B). The system and method relax the above constraints as follows.

Relaxing $z_{h,s}$: If it is assumed by the present disclosure that the maximum battery charging and discharging rates to be independent of the SOC level, then $z_{h,s}$ need not be introduced in the problem formulation. Let $r_{h,s}$ be a continuous variable that refers to the charging rate of battery with subscriber s during delivery slot *h*. A positive value for $r_{h,s}$ indicates that the battery is charging while a negative value indicates that it is discharging. If $R_{s,*}^{chg}$ and $R_{s,*}^{dsg}$ refer to the maximum charging and discharging rates respectively for a battery, then equations (4), (6), and (7) can be replaced with the following:

$$SOC_{h,s} = SOC_{h-1,s} + (r_{h,s} \times \Delta), \forall h \in W^t, \forall s \in S \qquad (19)$$

$$R_{s,*}^{dsg} \leq r_{h,s} \leq R_{s,*}^{chg}, \forall h \in W^t, \forall s \in S \tag{20}$$

where, $\Delta$ refers to the duration of a time slot.

Relaxing $\delta_h$: The variable $\delta_h$ forces the aggregator to place only a sell bid when the net energy available with the aggregator, $x_h^{tot}$, is positive. Similarly, when $x_h^{tot}$ is negative, the aggregator is forced to place only buy bids. In other words, $\delta_h$ acts like an indicator variable which becomes 1 only when $x_h^{tot} \geq 0$. This behavior can be approximated through a sigmoid function defined on the value of $x_h^{tot}$. Consider the sigmoid function $\sigma_h = \frac{1}{1+e^{-y}}$, where y = k. $x_h^{tot}$ with k being a large positive number. This function $\sigma_h$ can mimic the task of the integer variable $\delta_h$ while remaining continuous. Thus, equation (11) can be eliminated and equations (A), and (B) can be re-written as:

$$x_h^{tot} = \left( \frac{1}{1+e^{-k.x_h^{tot}}} \right) = qs_h, \forall h \in W^t \tag{21}$$

$$x_h^{tot} = \left( \frac{1}{1+e^{-k.x_h^{tot}}} - 1 \right) = qb_h, \forall h \in W^t \tag{22}$$

Together, the above two approximations convert the original MINLP to an NLP problem.

Scalability of the relaxations: The system and method present a brief explanation on the number of integer variables involved across the formulations: the original problem and the relaxations. For the original problem, integer variables get introduced at two places: (i) variable $z_{h,s}$ that denotes the state of battery charging/discharging and (ii) variable $\delta_h$ that denotes the aggregator's decision to place buy or sell bids at delivery slot h.

The number of $z_{h,s}$ instances in the problem increases linearly in the number of batteries in the aggregator's subscriber pool while the number of $\delta_h$ instances equal $\tau$, - the size of the optimization window $W^t$. Given these, the number of integer decision variables in the original problem is given by $O(\tau + \tau|S|)$. In the case of NLP, there are zero integer variables.

The one or more hardware processors 104 are further configured by the instructions to execute an intraday market clearing model based on the intraday bid associated with the plurality of DERs for the plurality of delivery slots to be traded in the intraday market, to obtain an intraday market output, wherein the intraday market output comprises information pertaining to at least one of (i) number of cleared buy bids, and (ii) number of cleared sell bids; and generate a final optimal intraday operating schedule for the plurality of DERs based on the intraday market output. The intraday market clearing model matches the aggregator's buy/sell bids against the existing bids in the intraday log to get the clearing status. An example of the clearing bids obtained from the intraday market clearing model are indicated in bold text in below Table 7.

Table 7

| Delivery hour | Sell bid | | Cleared sell | Buy bid | | Cleared buy |
|---|---|---|---|---|---|---|
| | Price (Euro) | Volume (MW) | **Volume (MW)** | Price (Euro) | Volume (MW) | **Volume (MW)** |
| 6:00 | - | - | **-** | 9.10 | 0.492 | **0.31** |
| 7:00 | - | - | **-** | 7.34 | 0.611 | **0** |
| 8:00 | 19.94 | 0.361 | **0.361** | - | - | - |
| 9:00 | 19.42 | 0.296 | **0.296** | - | - | - |

The final optimal intraday operating schedule for the one or more DERs is extracted values of the variables such as $G_{h,s}$, $d_{h,s}^{flex}$, $d_{h,s}^{fix}$, and $r_{h,s}$ obtained after completing the execution of the NLP problem.

The one or more hardware processors 104 are further configured by the instruction to repeat the steps of forecasting, estimating, and executing the optimization model based on the final optimal intraday operating schedule generated for the plurality of DERs to obtain (i) a subsequent optimal intraday operating schedule for one or more DERs from the plurality of DERs, and (ii) a subsequent intraday bid associated with the plurality of DERs for the plurality of delivery slots to be traded in the intraday market for a subsequent optimization window. As mentioned above, the initialization of optimization window for each simulation run (each trading hour) and the concept of moving window optimization applies for the steps being carried out again for obtaining the subsequent optimal intraday operating schedule and the subsequent intraday bid for the subsequent optimization window based on the final optimal intraday operating schedule.

EXPERIMENTAL SET-UP

Network details: The present disclosure tested the performance of the system and method on the IEEE 13 bus (node) radial distribution network shown in FIG. 3. The connectivity, voltage levels, line parameters, and background loads are all defined as given in the network specifications. For this network, the nodal injection/withdrawal limits for DERs were obtained as follows. The power injection/withdrawal by DERs in all the nodes is uniformly increased until the network operational constraints (such as thermal limits of the lines and voltage levels at the buses) are violated during network operations. The values at which the violations take place were taken as the network limits at the respective nodes. At different nodes of this network, the system and method introduced a set of 26 DERs whose operations is managed by a single aggregator. The DERs are assumed to be installed in a specific region/country (e.g., France, in this case) and for simplicity, the charging/discharging rates of the batteries were taken to be independent of the SOC. Information regarding the set of DERs introduced in the network is given in Table 2.

Market details: Real world logs of market operations of EPEX intraday market in France was obtained. The logs were obtained from the order book as well as the cleared transactions. This log contained data from September 2019 to June 2020. Using the market clearing rules, the system implemented the method/intraday market clearing model (also referred as clearing model and interchangeably used herein) to clear simple buy/sell bids placed in the order book. The clearing model was needed to clear the bids placed by the trading method mentioned and implemented by the system and method of the present disclosure - along with the other buy/sell orders present in the historical intraday market logs.

In order to optimize the bids placed in the market, the method of the present disclosure needs forecasts of the two-dimensional histogram ($f^{t,h}(p, q)$), customer demands, and solar generation for the time slots in the optimization window $W^t$. The histograms for the slots in $W^t$ were obtained using a persistence model - i.e., the histogram obtained over a window of previous 21 days was assumed to remain the same over the next day. For forecasting the solar generation and demand, the system and method used a stacked Long short-term memory (LSTM) network.

The system and method adopted a window size of $\tau = 6$ and $r = 2$ to achieve a balance between having a wide enough window for optimization and reliable forecasts.

Techniques compared: On the above-described network, DER population, and market set-up, the system and method studied the performance of the following techniques:

Baseline - ID3: The trading technique that the present disclosure considers as a baseline is very similar to the MINLP described herein but for the change that the price variables $ps_h$ and $pb_h$ are always set to be the ID3 price of a delivery slot. The ID3 price of a delivery slot has been defined as the volume weighted average price of the cleared transactions in the three hours prior to the delivery. The ID3 price was picked for trading since it is an important index based on which market participants hedge against positive or negative spikes (e.g., refer "Tim Janke and Florian Steinke. 2019. Forecasting the Price Distribution of Continuous Intraday Electricity Trading. Energies 12, 22 (2019)." and "Michal Narajewski and Florian Ziel. 2020. Econometric modelling and forecasting of intraday electricity prices. Journal of Commodity Markets 19 (2020), 100107."). While the price is fixed to be ID3, the optimal trade quantities are determined by solving the $\mathcal{A}(, |ps_h^0, pb_h^0)$ defined in equation (23) below with $ps_h^0 = pb_h^0 = ID3_h$.

$$\max_{q_h} \sum_{h \in W^t} ps_h^{(0)} qs_h F^{sell}(ps_h^0, qs_h) - \sum_{h \in W^t} pb_h^{(0)} qb_h (1 - F^{buy}(pb_h^0, qb_h))$$

$$(23)$$

Also, $F^{sell}(ps_h^0, qs_h)$, and $1 - F^{buy}(pb_h^0, qb_h)$ were taken to be 1 - i.e., bids based on the ID3 price were assumed to be cleared by the intraday market. This baseline helps the system and method of the present disclosure to understand the efficacy of modeling the market dynamics (through the joint price-volume histograms) in the optimal bid design.

NLP: This refers to the integer relaxation described earlier that converts the MINLP problem to the NLP problem.

The system and method of the present disclosure attempted to solve the MINLP in its entirety in commercial solvers such as CPLEX Optimizer as known in the art technique. It was noted here that before feeding the MINLP problem to CPLEX Optimizer, to make it easier for the solver, the system and method linearized constraints such as equations (4), (6), and (7) as described in the in the present disclosure. However, CPLEX Optimizer could not solve the problem due to a non-quadratic non-linear objective function present along with integer decision variables. The two relaxations were solved using open-source solvers such as GLPK (e.g., refer "GLPK. 2021. GNU Linear Programming Kit. https://www.gnu.org/software/glpk/.") and IPOPT (e.g., refer "A. Wachter and L. T. Biegler. 2006. On the implementation of a primal-dual interior point filter line search algorithm for large-scale nonlinear programming. Mathematical Programming 106, 1 (2006), 25-57.") on commonly found hardware. The performance of the three trading techniques have been compared across a set of 16 days in November 2019.

Metrics used for comparison: The performance of the various techniques has been compared based on the net revenue earned by them over a period of 16 trading days. Net revenue refers to the difference between the revenue inflow through sell trades and revenue outflow through buy trades. It is to be noted that there is no guarantee that the sell/buy bids placed by the aforesaid three techniques get cleared in the market in their entirety. Any volume of demand that is unmet from the intraday market trades is assumed to be bought in the balancing market at a rate that equals the 90*th* percentile of the intraday market prices for that slot.

RESULTS

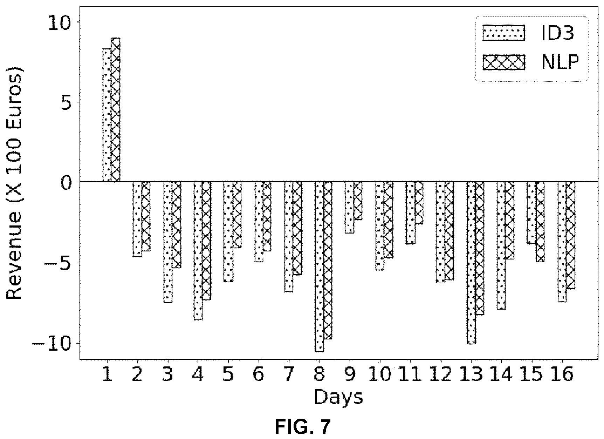

Before the system and method discuss the performance the bidding techniques, the present disclosure studied the accuracy of the intraday market clearing model as implemented by the system 100. To test the accuracy of clearing model, the buy/sell orders historically found in the intraday market order book were cleared. The ID3 price obtained through the clearing model was then compared with the actual values published by EPEX. FIG. 7 gives the ID3 prices obtained through real world market clearing and the intraday market clearing model of the system 100 of FIG. 1 for seven days. It was found that the ID3 price obtained from the intraday market clearing model closely follows that of EPEX. In certain time slots, however, it was observed by the system and method of the present disclosure that there was notable difference - this can be attributed to the presence of a higher fraction of complex bids during those slots in the actual market which was not modeled in the simulation by the present disclosure.

The system 100 found the MAPE value of the ID3 prices obtained through intraday market clearing model implemented by the system 100 to be 9.76%. This shows that for simple bids, the intraday market clearing model can be an acceptable proxy for real world market clearing.

Solving for the optimal bids for one value of t (for all $h \in W^t$) under each of ID3, and NLP techniques took an average of 11 seconds or less on commonly found hardware (4 cores, 8GB RAM, 64-bit machine).

Revenue earned: The revenue earned by the techniques across the 16 test days is shown in FIG. 7. More specifically, FIG. 7, with reference to FIGS. 1 through 6, depicts a graphical representation illustrating a comparison of revenue earned by a baseline trading technique (ID3) and the method of the present disclosure trading techniques across individual days, in accordance with an embodiment of the present disclosure. Revenue inflow is considered positive while outflow is negative. From FIG. 7, the following can be deduced: The daily revenue earned by aggregator under the techniques across a majority of the days is negative. In other words, the aggregator has to spend money to buy electricity from the market. This is because of two reasons: (i) the set of DERs considered include demands as well which necessitates that power be purchased from the market. (ii) the amount of generation from solar PV is not enough to over-weigh the demand on all days owing to the smaller panel sizes and/or the weather conditions (November).

On almost all the days, the revenue inflow/outflow under the techniques (NLP) is better than or very close to the baseline technique of ID3 based trading. When viewed holistically across all the 16 days, it was found that the baseline results in a revenue outflow of €8862 whereas, the technique NLP of the present disclosure resulted in an outflow of €7191. In other words, NLP improves the performance of the baseline by 19%. Recall from the above description that the baseline uses an optimization formulation similar to the technique of the present disclosure to determine the optimal quantities to trade.

However, it does not use the joint price-volume histograms in each transaction slot as done by the NLP problem and solving performed by the system and method of the present disclosure. This shows that modeling the market dynamics through price-volume histograms (the function ($f^{t,h}(p, q)$)) is helpful to design better trading bids.

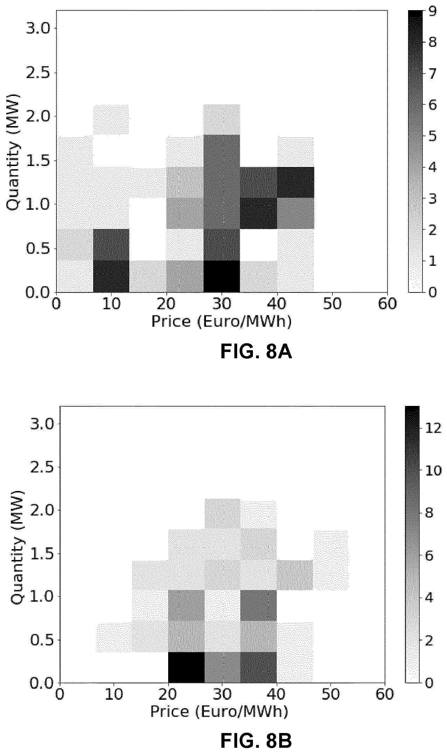

To understand how the price-volume histograms help to improve the performance of NLP over the ID3 baseline, the system and method of the present disclosure analyzed the bids placed by the techniques in the intraday market over a sample day. FIGS. 8A and 8B, with reference to FIGS. 1 through 7, depict a heatmap of buy bids placed by the baseline and the method of the present disclosure trading techniques respectively over a sample day (day 3), in accordance with an embodiment of the present disclosure. More specifically, FIG. 8A depicts a heatmap of buy bids placed by the baseline trading technique (ID3) over a sample day (day 3), in accordance with an embodiment of the present disclosure. FIG. 8B depicts a heatmap of buy bids placed by the method of the present disclosure trading techniques over a sample day (day 3), in accordance with an embodiment of the present disclosure. It can be clearly seen that the NLP problem formulation and solving by the system prefer the buy bids to be submitted at a price lower than €30 while the baseline prefers a higher buy price of €30. Note that picking a lower buy price may result in the buy bids not getting cleared which in turn necessitates the uncleared buy volume to be bought at a higher price in the balancing market. In spite of this, it was found that the method of the present disclosure results in an overall lower buying cost for the day. It was also found that the baseline prefers larger volumes in the buy bids while the method of the present disclosure preferred smaller volumes in the submitted bids. This gives some flexibility in pricing the individual (smaller) buy-volumes differently.

The propensity to submit buy bids at lower prices and still be successful is induced by the information carried by the forecasted cleared price-volume histograms. FIGS. 5A through 5D show the price-volume histograms, ($f^{t,h}(p, q)$), for two delivery hours $h = 7$ and $h = 23$ on day 3. For each of the delivery hours, the histograms for two different transaction slots $t = h$ - 7 and t = h - 4 are shown.

These two delivery slots have been chosen since their ID3 prices are almost equal (€45.63 and €44.59). However, when it is observed that the price-volume spreads, delivery hour $h = 7$ seems to clear bids at lower prices to a greater extent than $h = 23$ across transaction slots. Aided by such information, the NLP problem formulation and solving by the system submit buy bids at lower prices during appropriate transaction slots for the targeted delivery slots. A similar realization can be made for sell bids as well.

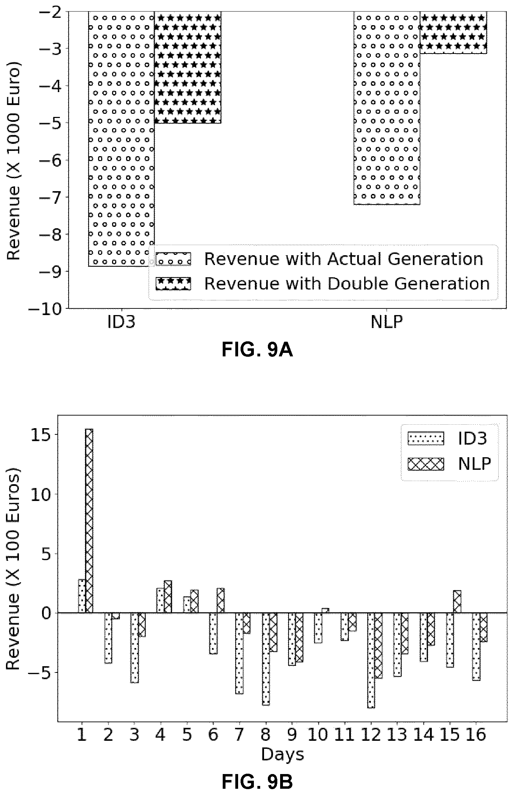

Impact of higher generation: The system and method also studied if the generation capacity available within the DER pool affected the relative performance of the baseline with respect to the method implemented herein. FIG. 9A, with reference to FIGS. 1 through 8B, depicts a graphical representation of a performance of the baseline trading technique (ID3) and the method of the present disclosure under a higher generation (twice the solar panel sizes with all other parameters remaining the same), in accordance with an embodiment of the present disclosure. As is expected, the revenue outflow from the aggregator decreases across all the techniques under increased generation. More importantly, it was observed that even under this higher generation, relative performance of the method of the present disclosure and the baseline does not change with respect to one other.

Impact of pool transactions: During a delivery slot $h$, an aggregator's subscriber base can be categorized into two types: type (i): those who generate electricity (solar, battery discharge) and type (ii): those who consume electricity (loads, battery charging). The generation available with the aggregator during $h$ can either be: (a) exported to the intraday market through sell bids or (b) utilized to meet the demands of its own subscribers falling under type (ii). Option (a) increases the revenue generated by the aggregator while option (b) reduces the cost incurred by the aggregator. Option (b) is referred to as "pool" trading. In the method as implemented by the system 100, the set of constraints that include variables $x_{h,n}^{pool}$ in their specifications are those that model the pool transactions. The pool transactions can be explicitly turned off by introducing additional constraints that set $xx_{h,n}^{pool} = 0$ for all $t$, $h$ and $n$.

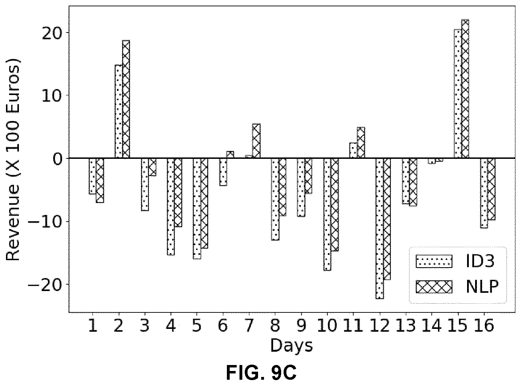

Impact of seasons and problem size: To better understand the behavior of the method of the present disclosure across seasons, the system 100 studied the performance over a different period - namely June 2020. FIG. 9B, with reference to FIGS. 1 through 9A, depicts a graphical representation of a performance of the method along with the baseline trading technique for a period June 2020, in accordance with an embodiment of the present disclosure. The revenue outflow for the aggregator under the baseline, NLP re €5842, and €268 respectively. As can be seen, the method performs better than the baseline during summer as well. The system 100 also tested the performance of the method under different problem sizes (i.e., varying number of DERs). FIG. 9C, with reference to FIGS. 1 through 9B, depicts a graphical representation of a performance of the method along with the baseline trading technique (ID3 - conventional approach) on a set of 250 DERs, in accordance with an embodiment of the present disclosure. It was found that the method of the present disclosure outperforms the baseline even under a large DER set. Further, Table 8 summarizes the key scalability parameters of the original problem and the two relaxations for different problem sizes.

Table 8

| Scenario | Original (baseline) (Continuous variables and integer variables) | NLP (present disclosure) (continuous variables and integer variables) |
|---|---|---|
| 50 DERs (16 batteries) | Not solvable; (882,102) | 7 seconds to solve; (9540) |
| 250 DERs (80 batteries) | Not solvable; (2538,486) | 12 seconds to solve; (29940) |
| 500 DERs (160 batteries) | Not solvable; (4608,966) | 35 seconds to solve; (55440) |

It was found by the present disclosure that on problems of reasonable size (five hundred DERs), the method implementing the NLP problem formulation and solving took 35 seconds to optimize the bids for the bids for one $W^t$ - a sequence of $\tau = 6$ consecutive delivery slots given by $[t + r, t + r + 6]$ on standard hardware (4 cores, 8GB RAM, 64 bit machine). However, the original formulation does not yield any results even on the smallest problem size (50 DERs). To summarize, it can be said that the relaxations as performed by the system and method described herein are relatively more scalable than the original problem.

Present disclosure provides system and method that formulate and solve an optimal bidding problem of aggregators managing heterogeneous DERs and participating in intraday electricity markets. The system and method modeled the joint price-volume dynamics present in these markets through two dimensional histograms and used it in the decision making. The optimal bidding problem turned out to be an MINLP problem. Since this problem could not be solved using commercial solvers, the system and method presented a relaxation of the problem which leverage different aspects of the problem's structure wherein the relaxation converted the MINLP to an NLP. The performance was tested against baseline approaches (ID3 price-based trading strategies) using real world market data. It was found that the relaxation improved the revenue performance of the aggregator by 19% relative to the ID3 price-based trading. Also, the performance gap between the baseline and method of the present disclosure remained robust to changes in subscriber generation limits.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, further comprising:

   obtaining, via one or more hardware processors (104), an input comprising i) historical data pertaining to generation and demand of energy, ii) historical intraday market data, iii) a specification of a plurality of distributed energy resources DERs connected to a network specific to an aggregator, iv) a preference of one or more subscribers, and v) information associated with the network specific to the aggregator (202);
   forecasting, via the one or more hardware processors (104), a generation and demand of energy by the plurality of DERs for a plurality of delivery slots in an initialized optimization window, based on the input (204);
   estimating, via the one or more hardware processors (104), a two-dimensional 2D distribution of price-volume for the plurality of delivery slots in the initialized optimization window based on the forecasted generation and demand of the energy by the plurality of DERs (206); and
   executing, an optimization model via the one or more hardware processors (104), using the estimated two-dimensional 2D distribution of price-volume for the plurality of delivery slots in the initialized optimization window to obtain i) an optimal intraday operating schedule for one or more DERs from the plurality of DERs, and, optionally, ii) an intraday bid associated with the plurality of DERs for the plurality of delivery slots to be traded in an intraday market (208), wherein the step of executing the optimization model comprises:

      formulating a mixed integer non-linear programming MINLP problem based on the input and the estimated two-dimensional 2D distribution of price-volume for the plurality of delivery slots in the initialized optimization window (208a);
      converting the formulated MINLP problem to an NLP problem (208b); and
      executing the NLP problem to obtain i) the optimal intraday operating schedule for one or more DERs from the plurality of DERs, and, optionally, ii) the intraday bid associated with the plurality of DERs for the plurality of delivery slots to be traded in an intraday market (208c).

2. The processor implemented method of claim 1, further comprising:

   executing, an intraday market clearing model via the one or more hardware processors (104), based on the intraday bid associated with the plurality of DERs for the plurality of delivery slots to be traded in the intraday market, to obtain an intraday market output, wherein the intraday market output comprises information pertaining to at least one of i) number of cleared buy bids, and ii) number of cleared sell bids; and
   generating a final optimal intraday operating schedule for the plurality of DERs based on the intraday market output.

3. The processor implemented method of claim 2, further comprising repeating the steps of forecasting, estimating, and executing the optimization model based on the final optimal intraday operating schedule generated for the plurality of DERs to obtain i) a subsequent optimal intraday operating schedule for one or more DERs from the plurality of DERs, and ii) a subsequent intraday bid associated with the plurality of DERs for the plurality of delivery slots to be traded in the intraday market for a subsequent optimization window.

4. The processor implemented method of claim 1, wherein the optimal intraday operating schedule for a first DER type comprises at least one of i) whether to charge or discharge in each delivery slot of the initialized optimization window, ii) a charging level or a discharging level in each delivery slot of the initialized optimization window; and iii) a state of charge SOC value of a DER of the first DER type at an end of each delivery slot.

5. The processor implemented method of claim 1, wherein the optimal intraday operating schedule for a second DER type comprises quantity of energy required to be provided to a power grid in each delivery slot, wherein the optimal intraday operating schedule for a third DER type comprises information pertaining to scheduling of an operation of a flexible load at one or more delivery slots, wherein the optimal intraday operating schedule for a third DER type comprises information pertaining to scheduling of an operation of a flexible load at one or more delivery slots, and wherein the NLP problem is obtained by relaxing at least one i) a first integer variable, and ii) a second integer variable comprised in the MINLP, wherein the first integer variable is based on a decision of a type of the intraday bid, and wherein the second integer variable is based on a constraint specific to a DER type.

6. A system (100), comprising:

   a memory (102) storing instructions;
   one or more communication interfaces (106); and
   one or more hardware processors (104) coupled to the memory (102) via the one or more communication interfaces (106), wherein the one or more hardware processors (104) are configured by the instructions to:

      obtain an input comprising i) historical data pertaining to generation and demand of energy, ii) historical intraday market data, iii) a specification of a plurality of distributed energy resources DERs connected to a network specific to an aggregator, iv) a preference of one or more subscribers, and v) information associated with the network specific to the aggregator;
      forecast a generation and demand of energy by the plurality of DERs for a plurality of delivery slots in an initialized optimization window, based on the input;
      estimate a two-dimensional 2D distribution of price-volume for the plurality of delivery slots in the initialized optimization window based on the forecasted generation and demand of energy by the plurality of DERs; and
      execute, an optimization model, using the estimated two-dimensional 2D distribution of price-volume for the plurality of delivery slots in the initialized optimization window to obtain i) an optimal intraday operating schedule for one or more DERs from the plurality of DERs, and, optionally, ii) an intraday bid associated with the plurality of DERs for the plurality of delivery slots to be traded in an intraday market, wherein the step of executing the optimization model comprises:

         formulating a mixed integer non-linear programming MINLP problem based on the input and the estimated two-dimensional 2D distribution of price-volume for the plurality of delivery slots in the initialized optimization window;
         converting the formulated MINLP problem to an NLP problem; and
         executing the NLP problem to obtain i) the optimal intraday operating schedule for one or more DERs from the plurality of DERs, and, optionally, ii) the intraday bid associated with the plurality of DERs for the plurality of delivery slots to be traded in an intraday market.

7. The system of claim 6, wherein the one or more hardware processors (104) are further configured by the instructions to

      execute, an intraday market clearing model, based on the intraday bid associated with the plurality of DERs for the plurality of delivery slots to be traded in the intraday market, to obtain an intraday market output, wherein the intraday market output comprises information pertaining to at least one of i) number of cleared buy bids, and ii) number of cleared sell bids; and
      generate a final optimal intraday operating schedule for the plurality of DERs based on the intraday market output.

8. The system of claim 7, wherein the one or more hardware processors (104) are further configured by the instructions to repeat the steps of forecasting, estimating, and executing the optimization model based on the final optimal intraday operating schedule generated for the plurality of DERs to obtain i) a subsequent optimal intraday operating schedule for one or more DERs from the plurality of DERs, and ii) a subsequent intraday bid associated with the plurality of DERs for the plurality of delivery slots to be traded in the intraday market for a subsequent optimization window.

9. The system of claim 6, wherein the optimal intraday operating schedule for a first DER type comprises at least one of i) whether to charge or discharge in each delivery slot of the initialized optimization window, ii) a charging level or a discharging level in each delivery slot of the initialized optimization window; and iii) a state of charge SOC value of a DER of the first DER type at an end of each delivery slot.

10. The system of claim 6, wherein the optimal intraday operating schedule for a second DER type comprises quantity of energy required to be provided to a power grid in each delivery slot, wherein the optimal intraday operating schedule for a third DER type comprises information pertaining to scheduling of an operation of a flexible load at one or more delivery slots, wherein the optimal intraday operating schedule for a third DER type comprises information pertaining to scheduling of an operation of a flexible load at one or more delivery slots, and wherein the NLP problem is obtained by relaxing at least one i) a first integer variable, and ii) a second integer variable comprised in the MINLP, wherein the first integer variable is based on a decision of a type of the intraday bid, and wherein the second integer variable is based on a constraint specific to a DER type.

11. One or more non-transitory machine-readable information storage mediums comprising one or more instructions which when executed by one or more hardware processors (104) cause:

obtaining, an input comprising i) historical data pertaining to generation and demand of energy, ii) historical intraday market data, iii) a specification of a plurality of distributed energy resources DERs connected to a network specific to an aggregator, iv) a preference of one or more subscribers, and v) information associated with the network specific to the aggregator;

forecasting a generation and demand of energy by the plurality of DERs for a plurality of delivery slots in an initialized optimization window, based on the input;

estimating a two-dimensional distribution of price-volume for the plurality of delivery slots in the initialized optimization window based on the forecasted generation and demand of the energy by the plurality of DERs; and

executing, an optimization model, using the estimated two-dimensional distribution of price-volume for the plurality of delivery slots in the initialized optimization window to obtain i) an optimal intraday operating schedule for one or more DERs from the plurality of DERs, and, optionally, ii) an intraday bid associated with the plurality of DERs for the plurality of delivery slots to be traded in an intraday market, wherein the step of executing the optimization model comprises:

formulating a mixed integer non-linear programming MINLP problem based on the input and the estimated two-dimensional distribution of price-volume for the plurality of delivery slots in the initialized optimization window;

converting the formulated MINLP problem to an NLP problem; and

executing the NLP problem to obtain i) the optimal intraday operating schedule for one or more DERs from the plurality of DERs, and, optionally, ii) the intraday bid associated with the plurality of DERs for the plurality of delivery slots to be traded in an intraday market.

12. The one or more non-transitory machine-readable information storage mediums of claim 11, wherein the one or more instructions which when executed by the one or more hardware processors (104) further cause:

executing, an intraday market clearing model, based on the intraday bid associated with the plurality of DERs for the plurality of delivery slots to be traded in the intraday market, to obtain an intraday market output, wherein the intraday market output comprises information pertaining to at least one of i) number of cleared buy bids, and ii) number of cleared sell bids; and

generating a final optimal intraday operating schedule for the plurality of DERs based on the intraday market output.

13. The one or more non-transitory machine-readable information storage mediums of claim 12, wherein the one or more instructions which when executed by the one or more hardware processors (104) further cause repeating the steps of forecasting, estimating, and executing the optimization model based on the final optimal intraday operating schedule generated for the plurality of DERs to obtain i) a subsequent optimal intraday operating schedule for one or more DERs from the plurality of DERs, and ii) a subsequent intraday bid associated with the plurality of DERs for the plurality of delivery slots to be traded in the intraday market for a subsequent optimization window.

**14.** The one or more non-transitory machine-readable information storage mediums of claim 11, wherein the optimal intraday operating schedule for a first DER type comprises at least one of i) whether to charge or discharge in each delivery slot of the initialized optimization window, ii) a charging level or a discharging level in each delivery slot of the initialized optimization window; and iii) a state of charge SOC value of a DER of the first DER type at an end of each delivery slot.

**15.** The one or more non-transitory machine-readable information storage mediums of claim 11, wherein the optimal intraday operating schedule for a second DER type comprises quantity of energy required to be provided to a power grid in each delivery slot, wherein the optimal intraday operating schedule for a third DER type comprises information pertaining to scheduling of an operation of a flexible load at one or more delivery slots, wherein the optimal intraday operating schedule for a third DER type comprises information pertaining to scheduling of an operation of a flexible load at one or more delivery slots, and wherein the NLP problem is obtained by relaxing at least one i) a first integer variable, and ii) a second integer variable comprised in the MINLP, wherein the first integer variable is based on a decision of a type of the intraday bid, and wherein the second integer variable is based on a constraint specific to a DER type.

**Patentansprüche**

**1.** Prozessorimplementiertes Verfahren, ferner umfassend:

Erhalten, über einen oder mehrere Hardwareprozessoren (104), einer Eingabe, umfassend i) historische Daten, die sich auf die Erzeugung und den Bedarf an Energie beziehen, ii) historische Intraday-Marktdaten, iii) eine Spezifikation einer Mehrzahl von verteilten Energieressourcen, DERs, die mit einem Netzwerk verbunden sind, das für einen Aggregator spezifisch ist, iv) eine Präferenz eines oder mehrerer Teilnehmer und v) Informationen, die mit dem Netzwerk assoziiert sind, das für den Aggregator (202) spezifisch ist;
Vorhersagen, über den einen oder die mehreren Hardwareprozessoren (104), einer Erzeugung und eines Bedarfs an Energie durch die Mehrzahl von DERs für eine Mehrzahl von Lieferslots in einem initialisierten Optimierungsfenster, basierend auf der Eingabe (204);
Schätzen, über den einen oder die mehreren Hardwareprozessoren (104), einer zweidimensionalen 2D-Verteilung des Preisvolumens für die Mehrzahl von Lieferslots in dem initialisierten Optimierungsfenster basierend auf der vorhergesagten Erzeugung und dem vorhergesagten Bedarf an Energie durch die Mehrzahl von DERs (206); und
Ausführen eines Optimierungsmodells über den einen oder die mehreren Hardwareprozessoren (104) unter Verwendung der geschätzten zweidimensionalen 2D-Verteilung des Preisvolumens für die Mehrzahl von Lieferslots in dem initialisierten Optimierungsfenster, um i) einen optimalen Intraday-Betriebsplan für einen oder mehrere DERs aus der Mehrzahl von DERs und optional ii) ein Intraday-Gebot, das mit der Mehrzahl von DERs assoziiert ist, für die Mehrzahl von Lieferslots, die in einem Intraday-Markt (208) gehandelt werden sollen, zu erhalten, wobei der Schritt des Ausführens des Optimierungsmodells umfasst:

Formulieren eines gemischten ganzzahligen nichtlinearen Programmierproblems, MINLP-Problems, basierend auf der Eingabe und der geschätzten zweidimensionalen 2D-Verteilung des Preisvolumens für die Mehrzahl von Lieferslots in dem initialisierten Optimierungsfenster (208a);
Umwandeln des formulierten MINLP-Problems in ein NLP-Problem (208b); und
Ausführen des NLP-Problems, um i) den optimalen Intraday-Betriebsplan für einen oder mehrere DERs aus der Mehrzahl von DERs und optional ii) das Intraday-Gebot, das mit der Mehrzahl von DERs assoziiert ist, für die Mehrzahl von Lieferslots, die in einem Intraday-Markt (208c) gehandelt werden sollen, zu erhalten.

**2.** Prozessorimplementiertes Verfahren nach Anspruch 1, ferner umfassend:

Ausführen eines Intraday-Markt-Clearing-Modells über den einen oder die mehreren Hardwareprozessoren (104), basierend auf dem Intraday-Gebot, das mit der Mehrzahl von DERs assoziiert ist, für die Mehrzahl von Lieferslots, die in dem Intraday-Markt gehandelt werden sollen, um eine Intraday-Marktausgabe zu erhalten, wobei die Intraday-Marktausgabe Informationen umfasst, die mindestens eines von i) Anzahl von Cleared-Kauf-Geboten und ii) Anzahl von Cleared-Verkauf-Geboten betreffen; und
Erzeugen eines endgültigen optimalen Intraday-Betriebsplans für die Mehrzahl von DERs basierend auf der Intraday-Marktausgabe.

3. Prozessorimplementiertes Verfahren nach Anspruch 2, ferner umfassend Wiederholen der Schritte des Vorhersagens, Schätzens und Ausführens des Optimierungsmodells basierend auf dem endgültigen optimalen Intraday-Betriebsplan, der für die Mehrzahl von DERs erzeugt wird, um i) einen nachfolgenden optimalen Intraday-Betriebsplan für einen oder mehrere DERs aus der Mehrzahl von DERs und ii) ein nachfolgendes Intraday-Gebot, das mit der Mehrzahl von DERs assoziiert ist, für die Mehrzahl von Lieferslots, die in dem Intraday-Markt gehandelt werden sollen, für ein nachfolgendes Optimierungsfenster zu erhalten.

4. Prozessorimplementiertes Verfahren nach Anspruch 1, wobei der optimale Intraday-Betriebsplan für einen ersten DER-Typ mindestens eines von i) ob in jedem Lieferslot des initialisierten Optimierungsfensters geladen oder entladen werden soll, ii) einem Ladepegel oder einem Entladepegel in jedem Lieferslot des initialisierten Optimierungsfensters und iii) einem Ladezustands-SOC-Wert eines DER des ersten DER-Typs an einem Ende jedes Lieferslots umfasst.

5. Prozessorimplementiertes Verfahren nach Anspruch 1, wobei der optimale Intraday-Betriebsplan für einen zweiten DER-Typ eine Menge an Energie umfasst, die erforderlich ist, um einem Stromnetz in jedem Lieferslot bereitgestellt zu werden, wobei der optimale Intraday-Betriebsplan für einen dritten DER-Typ Informationen umfasst, die die Planung eines Betriebs einer flexiblen Last an einem oder mehreren Lieferslots betreffen, wobei der optimale Intraday-Betriebsplan für einen dritten DER-Typ Informationen umfasst, die die Planung eines Betriebs einer flexiblen Last an einem oder mehreren Lieferslots betreffen, und wobei das NLP-Problem durch Entspannen mindestens eines von i) einer ersten ganzzahligen Variablen und ii) einer zweiten ganzzahligen Variablen, die in dem MINLP enthalten ist, erhalten wird, wobei die erste ganzzahlige Variable auf einer Entscheidung eines Typs des Intraday-Gebots basiert und wobei die zweite ganzzahlige Variable auf einer für einen DER-Typ spezifischen Beschränkung basiert.

6. System (100), umfassend:

einen Speicher (102), der Anweisungen speichert;
eine oder mehrere Kommunikationsschnittstellen (106); und
einen oder mehrere Hardwareprozessoren (104), die über die eine oder die mehreren Kommunikationsschnittstellen (106) mit dem Speicher (102) gekoppelt sind, wobei der eine oder die mehreren Hardwareprozessoren (104) durch die Anweisungen konfiguriert sind zum:

Erhalten einer Eingabe, umfassend i) historische Daten, die sich auf die Erzeugung und den Bedarf an Energie beziehen, ii) historische Intraday-Marktdaten, iii) eine Spezifikation einer Mehrzahl von verteilten Energieressourcen, DERs, die mit einem Netzwerk verbunden sind, das für einen Aggregator spezifisch ist, iv) eine Präferenz eines oder mehrerer Teilnehmer und v) Informationen, die mit dem Netzwerk assoziiert sind, das für den Aggregator spezifisch ist;
Vorhersagen einer Erzeugung und eines Bedarfs an Energie durch die Mehrzahl von DERs für eine Mehrzahl von Lieferslots in einem initialisierten Optimierungsfenster, basierend auf der Eingabe;
Schätzen einer zweidimensionalen 2D-Verteilung des Preisvolumens für die Mehrzahl von Lieferslots in dem initialisierten Optimierungsfenster basierend auf der vorhergesagten Erzeugung und dem vorhergesagten Bedarf an Energie durch die Mehrzahl von DERs; und
Ausführen eines Optimierungsmodells unter Verwendung der geschätzten zweidimensionalen 2D-Verteilung des Preisvolumens für die Mehrzahl von Lieferslots in dem initialisierten Optimierungsfenster, um i) einen optimalen Intraday-Betriebsplan für einen oder mehrere DERs aus der Mehrzahl von DERs und optional ii) ein Intraday-Gebot, das mit der Mehrzahl von DERs assoziiert ist, für die Mehrzahl von Lieferslots, die in einem Intraday-Markt gehandelt werden sollen, zu erhalten, wobei der Schritt des Ausführens des Optimierungsmodells umfasst:

Formulieren eines gemischten ganzzahligen nichtlinearen Programmierproblems, MINLP-Problems, basierend auf der Eingabe und der geschätzten zweidimensionalen 2D-Verteilung des Preisvolumens für die Mehrzahl von Lieferslots in dem initialisierten Optimierungsfenster;
Umwandeln des formulierten MINLP-Problems in ein NLP-Problem; und
Ausführen des NLP-Problems, um i) den optimalen Intraday-Betriebsplan für einen oder mehrere DERs aus der Mehrzahl von DERs und optional ii) das Intraday-Gebot, das mit der Mehrzahl von DERs assoziiert ist, für die Mehrzahl von Lieferslots, die in einem Intraday-Markt gehandelt werden sollen, zu erhalten.

7. System nach Anspruch 6, wobei der eine oder die mehreren Hardwareprozessoren (104) ferner durch die Anweisungen konfiguriert sind zum:

Ausführen eines Intraday-Markt-Clearing-Modells, basierend auf dem Intraday-Gebot, das mit der Mehrzahl von DERs assoziiert ist, für die Mehrzahl von Lieferslots, die in dem Intraday-Markt gehandelt werden sollen, um eine Intraday-Marktausgabe zu erhalten, wobei die Intraday-Marktausgabe Informationen umfasst, die mindestens eines von i) Anzahl von Cleared-Kauf-Geboten und ii) Anzahl von Cleared-Verkauf-Geboten betreffen; und
Erzeugen eines endgültigen optimalen Intraday-Betriebsplans für die Mehrzahl von DERs basierend auf der Intraday-Marktausgabe.

8. System nach Anspruch 7, wobei der eine oder die mehreren Hardwareprozessoren (104) ferner durch die Anweisungen konfiguriert sind zum Wiederholen der Schritte des Vorhersagens, Schätzens und Ausführens des Optimierungsmodells basierend auf dem endgültigen optimalen Intraday-Betriebsplan, der für die Mehrzahl von DERs erzeugt wird, um i) einen nachfolgenden optimalen Intraday-Betriebsplan für einen oder mehrere DERs aus der Mehrzahl von DERs und ii) ein nachfolgendes Intraday-Gebot, das mit der Mehrzahl von DERs assoziiert ist, für die Mehrzahl von Lieferslots, die in dem Intraday-Markt gehandelt werden sollen, für ein nachfolgendes Optimierungsfenster zu erhalten.

9. System nach Anspruch 6, wobei der optimale Intraday-Betriebsplan für einen ersten DER-Typ mindestens eines von i) ob in jedem Lieferslot des initialisierten Optimierungsfensters geladen oder entladen werden soll, ii) einem Ladepegel oder einem Entladepegel in jedem Lieferslot des initialisierten Optimierungsfensters und iii) einem Ladezustands-SOC-Wert eines DER des ersten DER-Typs an einem Ende jedes Lieferslots umfasst.

10. System nach Anspruch 6, wobei der optimale Intraday-Betriebsplan für einen zweiten DER-Typ eine Menge an Energie umfasst, die erforderlich ist, um einem Stromnetz in jedem Lieferslot bereitgestellt zu werden, wobei der optimale Intraday-Betriebsplan für einen dritten DER-Typ Informationen umfasst, die die Planung eines Betriebs einer flexiblen Last an einem oder mehreren Lieferslots betreffen, wobei der optimale Intraday-Betriebsplan für einen dritten DER-Typ Informationen umfasst, die die Planung eines Betriebs einer flexiblen Last an einem oder mehreren Lieferslots betreffen, und wobei das NLP-Problem durch Entspannen mindestens eines von i) einer ersten ganzzahligen Variablen und ii) einer zweiten ganzzahligen Variablen, die in dem MINLP enthalten ist, erhalten wird, wobei die erste ganzzahlige Variable auf einer Entscheidung eines Typs des Intraday-Gebots basiert und wobei die zweite ganzzahlige Variable auf einer für einen DER-Typ spezifischen Beschränkung basiert.

11. Ein oder mehrere nichtflüchtige maschinenlesbare Informationsspeichermedien, die eine oder mehrere Anweisungen umfassen, die, wenn sie von einem oder mehreren Hardwareprozessoren (104) ausgeführt werden, bewirken:

Erhalten einer Eingabe, umfassend i) historische Daten, die sich auf die Erzeugung und den Bedarf an Energie beziehen, ii) historische Intraday-Marktdaten, iii) eine Spezifikation einer Mehrzahl von verteilten Energieressourcen, DERs, die mit einem Netzwerk verbunden sind, das für einen Aggregator spezifisch ist, iv) eine Präferenz eines oder mehrerer Teilnehmer und v) Informationen, die mit dem Netzwerk assoziiert sind, das für den Aggregator spezifisch ist;
Vorhersagen einer Erzeugung und eines Bedarfs an Energie durch die Mehrzahl von DERs für eine Mehrzahl von Lieferslots in einem initialisierten Optimierungsfenster, basierend auf der Eingabe;
Schätzen einer zweidimensionalen Verteilung des Preisvolumens für die Mehrzahl von Lieferslots in dem initialisierten Optimierungsfenster basierend auf der vorhergesagten Erzeugung und dem vorhergesagten Bedarf an Energie durch die Mehrzahl von DERs; und
Ausführen eines Optimierungsmodells unter Verwendung der geschätzten zweidimensionalen Verteilung des Preisvolumens für die Mehrzahl von Lieferslots in dem initialisierten Optimierungsfenster, um i) einen optimalen Intraday-Betriebsplan für einen oder mehrere DERs aus der Mehrzahl von DERs und optional ii) ein Intraday-Gebot, das mit der Mehrzahl von DERs assoziiert ist, für die Mehrzahl von Lieferslots, die in einem Intraday-Markt gehandelt werden sollen, zu erhalten, wobei der Schritt des Ausführens des Optimierungsmodells umfasst:

Formulieren eines gemischten ganzzahligen nichtlinearen Programmierproblems, MINLP-Problems, basierend auf der Eingabe und der geschätzten zweidimensionalen Verteilung des Preisvolumens für die Mehrzahl von Lieferslots in dem initialisierten Optimierungsfenster;
Umwandeln des formulierten MINLP-Problems in ein NLP-Problem; und
Ausführen des NLP-Problems, um i) den optimalen Intraday-Betriebsplan für einen oder mehrere DERs aus der Mehrzahl von DERs und optional ii) das Intraday-Gebot, das mit der Mehrzahl von DERs assoziiert ist, für die Mehrzahl von Lieferslots, die in einem Intraday-Markt gehandelt werden sollen, zu erhalten.

12. Ein oder mehrere nichtflüchtige maschinenlesbare Informationsspeichermedien nach Anspruch 11, wobei die eine oder die mehreren Anweisungen, die, wenn sie von dem einen oder den mehreren Hardwareprozessoren (104) ausgeführt werden, ferner bewirken:

Ausführen eines Intraday-Markt-Clearing-Modells, basierend auf dem Intraday-Gebot, das mit der Mehrzahl von DERs assoziiert ist, für die Mehrzahl von Lieferslots, die in dem Intraday-Markt gehandelt werden sollen, um eine Intraday-Marktausgabe zu erhalten, wobei die Intraday-Marktausgabe Informationen umfasst, die mindestens eines von i) Anzahl von Cleared-Kauf-Geboten und ii) Anzahl von Cleared-Verkauf-Geboten betreffen; und

Erzeugen eines endgültigen optimalen Intraday-Betriebsplans für die Mehrzahl von DERs basierend auf der Intraday-Marktausgabe.

13. Ein oder mehrere nichtflüchtige maschinenlesbare Informationsspeichermedien nach Anspruch 12, wobei die eine oder die mehreren Anweisungen, die, wenn sie von dem einen oder den mehreren Hardwareprozessoren (104) ausgeführt werden, ferner bewirken, dass die Schritte des Vorhersagens, Schätzens und Ausführens des Optimierungsmodells basierend auf dem endgültigen optimalen Intraday-Betriebsplan, der für die Mehrzahl von DERs erzeugt wird, wiederholt werden, um i) einen nachfolgenden optimalen Intraday-Betriebsplan für einen oder mehrere DERs aus der Mehrzahl von DERs und ii) ein nachfolgendes Intraday-Gebot, das mit der Mehrzahl von DERs assoziiert ist, für die Mehrzahl von Lieferslots, die in dem Intraday-Markt gehandelt werden sollen, für ein nachfolgendes Optimierungsfenster zu erhalten.

14. Ein oder mehrere nichtflüchtige maschinenlesbare Informationsspeichermedien nach Anspruch 11, wobei der optimale Intraday-Betriebsplan für einen ersten DER-Typ mindestens eines von i) ob in jedem Lieferslot des initialisierten Optimierungsfensters geladen oder entladen werden soll, ii) einem Ladepegel oder einem Entladepegel in jedem Lieferslot des initialisierten Optimierungsfensters und iii) einem Ladezustands-SOC-Wert eines DER des ersten DER-Typs an einem Ende jedes Lieferslots umfasst.

15. Ein oder mehrere nichtflüchtige maschinenlesbare Informationsspeichermedien nach Anspruch 11, wobei der optimale Intraday-Betriebsplan für einen zweiten DER-Typ eine Menge an Energie umfasst, die erforderlich ist, um einem Stromnetz in jedem Lieferslot bereitgestellt zu werden, wobei der optimale Intraday-Betriebsplan für einen dritten DER-Typ Informationen umfasst, die die Planung eines Betriebs einer flexiblen Last an einem oder mehreren Lieferslot betreffen, wobei der optimale Intraday-Betriebsplan für einen dritten DER-Typ Informationen umfasst, die die Planung eines Betriebs einer flexiblen Last an einem oder mehreren Lieferslots betreffen, und wobei das NLP-Problem durch Entspannen mindestens eines von i) einer ersten ganzzahligen Variablen und ii) einer zweiten ganzzahligen Variablen, die in dem MINLP enthalten ist, erhalten wird, wobei die erste ganzzahlige Variable auf einer Entscheidung eines Typs des Intraday-Gebots basiert und wobei die zweite ganzzahlige Variable auf einer für einen DER-Typ spezifischen Beschränkung basiert.

## Revendications

1. Procédé mis en oeuvre par processeur, comprenant en outre le fait de :

obtenir, par l'intermédiaire d'un ou plusieurs processeurs matériels (104), une entrée comprenant i) des données historiques se rapportant à une production et à une demande d'énergie, ii) des données de marché intrajournalier historiques, iii) une spécification d'une pluralité de ressources énergétiques distribuées, DER, connectées à un réseau spécifique à un agrégateur, iv) une préférence d'un ou plusieurs abonnés, et v) des informations associées au réseau spécifique à l'agrégateur (202) ;
prédire, par l'intermédiaire dudit un ou desdits plusieurs processeurs matériels (104), une production et une demande d'énergie par la pluralité de ressources DER pour une pluralité de créneaux de livraison dans une fenêtre d'optimisation initialisée, sur la base de l'entrée (204) ;
estimer, par l'intermédiaire dudit un ou desdits plusieurs processeurs matériels (104), une distribution bidimensionnelle, 2D, de prix-volume pour la pluralité de créneaux de livraison dans la fenêtre d'optimisation initialisée, sur la base de la production et de la demande d'énergie prédites, par la pluralité de ressources DER (206) ; et
exécuter un modèle d'optimisation, par l'intermédiaire dudit un ou desdits plusieurs processeurs matériels (104), en utilisant la distribution bidimensionnelle, 2D, de prix-volume estimée pour la pluralité de créneaux de livraison dans la fenêtre d'optimisation initialisée, en vue d'obtenir i) un programme d'exploitation intrajournalier optimal pour une ou plusieurs ressources DER parmi la pluralité de ressources DER, et, facultativement, ii) une offre intrajournalière associée à la pluralité de ressources DER pour la pluralité de créneaux de livraison à négocier sur un marché intrajournalier (208), dans laquelle l'étape d'exécution du modèle d'optimisation comprend le fait de :

formuler un problème de programmation non linéaire en nombres entiers mixtes, MINLP, sur la base de l'entrée et de la distribution bidimensionnelle, 2D, de prix-volume estimée pour la pluralité de créneaux de livraison dans la fenêtre d'optimisation initialisée (208a) ;
convertir le problème de programmation MINLP formulé en un problème de programmation NLP (208b) ; et exécuter le problème de programmation NLP en vue d'obtenir i) le programme d'exploitation intrajournalier optimal pour une ou plusieurs ressources DER parmi la pluralité de ressources DER et, facultativement, ii) l'offre intrajournalière associée à la pluralité de ressources DER pour la pluralité de créneaux de livraison à négocier sur un marché intrajournalier (208c).

2. Procédé mis en oeuvre par processeur selon la revendication 1, comprenant en outre le fait de :

exécuter un modèle de compensation de marché intrajournalier, par l'intermédiaire dudit un ou desdits plusieurs processeurs matériels (104), sur la base de l'offre intrajournalière associée à la pluralité de ressources DER pour la pluralité de créneaux de livraison à négocier sur le marché intrajournalier, en vue d'obtenir une sortie de marché intrajournalier, dans laquelle la sortie de marché intrajournalier comprend des informations se rapportant à au moins l'un parmi i) un nombre d'offres d'achat compensées, et ii) un nombre d'offres de vente compensées ; et
générer un programme d'exploitation intrajournalier optimal final pour la pluralité de ressources DER sur la base de la sortie de marché intrajournalier.

3. Procédé mis en oeuvre par processeur selon la revendication 2, comprenant en outre le fait de répéter les étapes de prédiction, d'estimation et d'exécution du modèle d'optimisation sur la base du programme d'exploitation intrajournalier optimal final généré pour la pluralité de ressources DER, en vue d'obtenir i) un programme d'exploitation intrajournalier optimal subséquent pour une ou plusieurs ressources DER parmi la pluralité de ressources DER, et ii) une offre intrajournalière subséquente associée à la pluralité de ressources DER pour la pluralité de créneaux de livraison à négocier sur le marché intrajournalier pour une fenêtre d'optimisation subséquente.

4. Procédé mis en oeuvre par processeur selon la revendication 1, dans lequel le programme d'exploitation intrajournalier optimal pour un premier type de ressource DER comprend au moins l'un des éléments parmi i) la nécessité ou non de charger ou décharger dans chaque créneau de livraison de la fenêtre d'optimisation initialisée, ii) un niveau de charge ou un niveau de décharge dans chaque créneau de livraison de la fenêtre d'optimisation initialisée ; et iii) une valeur d'état de charge, SOC, d'une ressource DER du premier type de ressource DER à la fin de chaque créneau de livraison.

5. Procédé mis en oeuvre par processeur selon la revendication 1, dans lequel le programme d'exploitation intrajournalier optimal pour un deuxième type de ressource DER comprend une quantité d'énergie devant être fournie à un réseau électrique dans chaque créneau de livraison, dans lequel le programme d'exploitation intrajournalier optimal pour un troisième type de ressource DER comprend des informations se rapportant à la planification de l'exploitation d'une charge flexible au cours d'un ou plusieurs créneaux de livraison, et dans lequel le problème de programmation NLP est obtenu en assouplissant au moins i) une première variable entière, et ii) une deuxième variable entière comprise dans la programmation MINLP, dans laquelle la première variable entière est basée sur une décision relative à un type de l'offre intrajournalière, et dans laquelle la deuxième variable entière est basée sur une contrainte spécifique à un type de ressource DER.

6. Système (100), comprenant :

une mémoire (102) stockant des instructions ;
une ou plusieurs interfaces de communication (106) ; et
un ou plusieurs processeurs matériels (104) couplés à la mémoire (102) par l'intermédiaire de ladite une ou desdites plusieurs interfaces de communication (106), dans lesquels ledit un ou lesdits plusieurs processeurs matériels (104) sont configurés, par les instructions, de manière à :

obtenir une entrée comprenant i) des données historiques se rapportant à une production et à une demande d'énergie, ii) des données de marché intrajournalier historiques, iii) une spécification d'une pluralité de ressources énergétiques distribuées, DER, connectées à un réseau spécifique à un agrégateur, iv) une préférence d'un ou plusieurs abonnés, et v) des informations associées au réseau spécifique à l'agrégateur ;

prédire une production et une demande d'énergie par la pluralité de ressources DER pour une pluralité de créneaux de livraison dans une fenêtre d'optimisation initialisée, sur la base de l'entrée ;

estimer une distribution bidimensionnelle, 2D, de prix-volume pour la pluralité de créneaux de livraison dans la fenêtre d'optimisation initialisée, sur la base de la production et de la demande d'énergie prédites, par la pluralité de ressources DER ; et

exécuter un modèle d'optimisation, en utilisant la distribution bidimensionnelle, 2D, de prix-volume estimée pour la pluralité de créneaux de livraison dans la fenêtre d'optimisation initialisée, en vue d'obtenir i) un programme d'exploitation intrajournalier optimal pour une ou plusieurs ressources DER parmi la pluralité de ressources DER, et, facultativement, ii) une offre intrajournalière associée à la pluralité de ressources DER pour la pluralité de créneaux de livraison à négocier sur un marché intrajournalier, dans laquelle l'étape d'exécution du modèle d'optimisation comprend le fait de :

formuler un problème de programmation non linéaire en nombres entiers mixtes, MINLP, sur la base de l'entrée et de la distribution bidimensionnelle, 2D, de prix-volume estimée pour la pluralité de créneaux de livraison dans la fenêtre d'optimisation initialisée ;

convertir le problème de programmation MINLP formulé en un problème de programmation NLP ; et

exécuter le problème de programmation NLP en vue d'obtenir i) le programme d'exploitation intrajournalier optimal pour une ou plusieurs ressources DER parmi la pluralité de ressources DER et, facultativement, ii) l'offre intrajournalière associée à la pluralité de ressources DER pour la pluralité de créneaux de livraison à négocier sur un marché intrajournalier.

7. Système selon la revendication 6, dans lequel ledit un ou lesdits plusieurs processeurs matériels (104) sont en outre configurés, par les instructions, de manière à :

exécuter un modèle de compensation de marché intrajournalier, sur la base de l'offre intrajournalière associée à la pluralité de ressources DER pour la pluralité de créneaux de livraison à négocier sur le marché intrajournalier, en vue d'obtenir une sortie de marché intrajournalier, dans laquelle la sortie de marché intrajournalier comprend des informations se rapportant à au moins l'un parmi i) un nombre d'offres d'achat compensées, et ii) un nombre d'offres de vente compensées ; et

générer un programme d'exploitation intrajournalier optimal final pour la pluralité de ressources DER sur la base de la sortie de marché intrajournalier.

8. Système selon la revendication 7, dans lequel ledit un ou lesdits plusieurs processeurs matériels (104) sont en outre configurés, par les instructions, de manière à répéter les étapes de prédiction, d'estimation, et d'exécution du modèle d'optimisation sur la base du programme d'exploitation intrajournalier optimal final généré pour la pluralité de ressources DER en vue d'obtenir i) un programme d'exploitation intrajournalier optimal subséquent pour une ou plusieurs ressources DER parmi la pluralité de ressources DER, et ii) une offre intrajournalière subséquente associée à la pluralité de ressources DER pour la pluralité de créneaux de livraison à négocier sur le marché intrajournalier pour une fenêtre d'optimisation subséquente.

9. Système selon la revendication 6, dans lequel le programme d'exploitation intrajournalier optimal pour un premier type de ressource DER comprend au moins l'un des éléments parmi i) la nécessité ou non de charger ou décharger dans chaque créneau de livraison de la fenêtre d'optimisation initialisée, ii) un niveau de charge ou un niveau de décharge dans chaque créneau de livraison de la fenêtre d'optimisation initialisée ; et iii) une valeur d'état de charge, SOC, d'une ressource DER du premier type de ressource DER à la fin de chaque créneau de livraison.

10. Système selon la revendication 6, dans lequel le programme d'exploitation intrajournalier optimal pour un deuxième type de ressource DER comprend une quantité d'énergie devant être fournie à un réseau électrique dans chaque créneau de livraison, dans lequel le programme d'exploitation intrajournalier optimal pour un troisième type de ressource DER comprend des informations se rapportant à la planification de l'exploitation d'une charge flexible au cours d'un ou plusieurs créneaux de livraison, et dans lequel le problème de programmation NLP est obtenu en assouplissant au moins i) une première variable entière, et ii) une deuxième variable entière comprise dans la programmation MINLP, dans laquelle la première variable entière est basée sur une décision relative à un type de l'offre intrajournalière, et dans laquelle la deuxième variable entière est basée sur une contrainte spécifique à un type de ressource DER.

11. Un ou plusieurs supports non transitoires de stockage d'informations lisibles par machine comprenant une ou plusieurs instructions qui, lorsqu'elles sont exécutées par un ou plusieurs processeurs matériels (104), occasionnent le fait de :

obtenir une entrée comprenant i) des données historiques se rapportant à une production et à une demande d'énergie, ii) des données de marché intrajournalier historiques, iii) une spécification d'une pluralité de ressources énergétiques distribuées, DER, connectées à un réseau spécifique à un agrégateur, iv) une préférence d'un ou plusieurs abonnés, et v) des informations associées au réseau spécifique à l'agrégateur ;
prédire une production et une demande d'énergie par la pluralité de ressources DER pour une pluralité de créneaux de livraison dans une fenêtre d'optimisation initialisée, sur la base de l'entrée ;
estimer une distribution bidimensionnelle de prix-volume pour la pluralité de créneaux de livraison dans la fenêtre d'optimisation initialisée, sur la base de la production et de la demande d'énergie prédites, par la pluralité de ressources DER ; et
exécuter un modèle d'optimisation, en utilisant la distribution bidimensionnelle de prix-volume estimée pour la pluralité de créneaux de livraison dans la fenêtre d'optimisation initialisée, en vue d'obtenir i) un programme d'exploitation intrajournalier optimal pour une ou plusieurs ressources DER parmi la pluralité de ressources DER, et, facultativement, ii) une offre intrajournalière associée à la pluralité de ressources DER pour la pluralité de créneaux de livraison à négocier sur un marché intrajournalier, dans laquelle l'étape d'exécution du modèle d'optimisation comprend le fait de :

formuler un problème de programmation non linéaire en nombres entiers mixtes, MINLP, sur la base de l'entrée et de la distribution bidimensionnelle de prix-volume estimée pour la pluralité de créneaux de livraison dans la fenêtre d'optimisation initialisée ;
convertir le problème de programmation MINLP formulé en un problème de programmation NLP ; et
exécuter le problème de programmation NLP en vue d'obtenir i) le programme d'exploitation intrajournalier optimal pour une ou plusieurs ressources DER parmi la pluralité de ressources DER et, facultativement, ii) l'offre intrajournalière associée à la pluralité de ressources DER pour la pluralité de créneaux de livraison à négocier sur un marché intrajournalier.

12. Ledit un ou lesdits plusieurs supports non transitoires de stockage d'informations lisibles par machine selon la revendication 11, dans lequel ladite une ou lesdites plusieurs instructions, lorsqu'elles sont exécutées par ledit un ou lesdites plusieurs processeurs matériels (104), occasionnent en outre le fait de :

exécuter un modèle de compensation de marché intrajournalier, sur la base de l'offre intrajournalière associée à la pluralité de ressources DER pour la pluralité de créneaux de livraison à négocier sur le marché intrajournalier, en vue d'obtenir une sortie de marché intrajournalier, dans laquelle la sortie de marché intrajournalier comprend des informations se rapportant à au moins l'un parmi i) un nombre d'offres d'achat compensées, et ii) un nombre d'offres de vente compensées ; et
générer un programme d'exploitation intrajournalier optimal final pour la pluralité de ressources DER sur la base de la sortie de marché intrajournalier.

13. Ledit un ou lesdits plusieurs supports non transitoires de stockage d'informations lisibles par machine selon la revendication 12, dans lequel ladite une ou lesdites plusieurs instructions, lorsqu'elles sont exécutées par ledit un ou lesdites plusieurs processeurs matériels (104), occasionnent en outre le fait de répéter les étapes de prédiction, d'estimation, et d'exécution du modèle d'optimisation sur la base du programme d'exploitation intrajournalier optimal final généré pour la pluralité de ressources DER en vue d'obtenir i) un programme d'exploitation intrajournalier optimal subséquent pour une ou plusieurs ressources DER parmi la pluralité de ressources DER, et ii) une offre intrajournalière subséquente associée à la pluralité de ressources DER pour la pluralité de créneaux de livraison à négocier sur le marché intrajournalier pour une fenêtre d'optimisation subséquente.

14. Ledit un ou lesdits plusieurs supports non transitoires de stockage d'informations lisibles par machine selon la revendication 11, dans lequel le programme d'exploitation intrajournalier optimal pour un premier type de ressource DER comprend au moins l'un des éléments parmi i) la nécessité ou non de charger ou décharger dans chaque créneau de livraison de la fenêtre d'optimisation initialisée, ii) un niveau de charge ou un niveau de décharge dans chaque créneau de livraison de la fenêtre d'optimisation initialisée ; et iii) une valeur d'état de charge, SOC, d'une ressource DER du premier type de ressource DER à la fin de chaque créneau de livraison.

**15.** Ledit un ou lesdits plusieurs supports non transitoires de stockage d'informations lisibles par machine selon la revendication 11, dans lequel le programme d'exploitation intrajournalier optimal pour un deuxième type de ressource DER comprend une quantité d'énergie devant être fournie à un réseau électrique dans chaque créneau de livraison, dans lequel le programme d'exploitation intrajournalier optimal pour un troisième type de ressource DER comprend des informations se rapportant à la planification de l'exploitation d'une charge flexible au cours d'un ou plusieurs créneaux de livraison, et dans lequel le problème de programmation NLP est obtenu en assouplissant au moins i) une première variable entière, et ii) une deuxième variable entière comprise dans la programmation MINLP, dans laquelle la première variable entière est basée sur une décision relative à un type de l'offre intrajournalière, et dans laquelle la deuxième variable entière est basée sur une contrainte spécifique à un type de ressource DER.

SYSTEM
100

MEMORY
102

DATABASE
108

HARDWARE
PROCESSOR(S)
104

INTERFACE(S)
106

**FIG. 1**

obtaining an input comprising (i) historical data pertaining to generation and demand of energy, (ii) historical intraday market data, (iii) a specification of a plurality of distributed energy resources (DERs) connected to a network specific to an aggregator, (iv) a preference of one or more subscribers, and (v) information associated with the network specific to the aggregator — 202

forecasting a generation and demand of energy by the plurality of DERs for a plurality of delivery slots in an initialized optimization window, based on the input — 204

estimating a two-dimensional (2D) distribution of price-volume for the plurality of delivery slots in the initialized optimization window based on the forecasted generation and demand of the energy by the plurality of DERs — 206

executing, an optimization model, using the estimated two-dimensional (2D) distribution of price-volume for the plurality of delivery slots in the initialized optimization window to obtain at least one of (i) an optimal intraday operating schedule for one or more DERs from the plurality of DERs, and (ii) an intraday bid associated with the plurality of DERs for the plurality of delivery slots to be traded in an intraday market — 208

**FIG. 2**

**FIG. 3**

Current time
slot

Delivery slots for which
bis are optimized at t
(# of such slots = $\zeta$)

**FIG. 4**

**FIG. 5A**

**FIG. 5B**

FIG. 5C

FIG. 5D

formulating a mixed integer non-linear programming (MINLP) problem based on the input and the estimated two-dimensional (2D) distribution of price-volume for the plurality of delivery slots in the initialized optimization window                    ⌐∿208a

converting the formulated MINLP problem to an NLP problem                    ⌐∿208b

executing the NLP problem to obtain the at least one of (i) the optimal intraday operating schedule for one or more DERs from the plurality of DERs, and (ii) the intraday bid associated with the plurality of DERs for the plurality of delivery slots to be traded in an intraday market                    ⌐∿208c

**FIG. 6**

**FIG. 7**

FIG. 8A

FIG. 8B

**FIG. 9A**

**FIG. 9B**

**FIG. 9C**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221034619

**Non-patent literature cited in the description**

- **MENON VISHNU P et al.** *Modeling Uncertainty of Day-ahead Market Prices for Energy Storage Aggregator*
- **YANG CHANGHAI et al.** *Optimal Scheduling Strategy of Demand Response Aggregators Considering Customers' Complicated Response Characteristic*
- **OLIVARES DANIEL E et al.** *A Centralized Energy Management System for Isolated Microgrids*
- **ALEKSANDRA ROOSA ; STIG Ø. OTTESENB ; TORJUS F. BOLKESJOA.** Modeling consumer flexibility of an aggregator participating in the wholesale power market and the regulation capacity market. *Renewable Energy Research Conference.,* 2014
- **J. E. CONTRERAS-OCAÑA ; M. A. ORTEGA-VAZQUEZ ; B. ZHANG.** Participation of an Energy Storage Aggregator in Electricity Markets. *IEEE Transactions on Smart Grid,* 2019, vol. 10 (2), 1171-1183
- **MARINA GONZÁLEZ VAYÁ ; GÖRAN ANDERS-SON.** Optimal bidding strategy of a plug-in electric vehicle aggregator in day-ahead electricity markets under uncertainty. *IEEE transactions on power systems,* 2014, vol. 30 (5), 2375-2385
- **HOSNA KHAJEH ; ASGHAR AKBARI FOROUD ; HOOMAN FIROOZI.** Robust bidding strategies and scheduling of a price-maker microgrid aggregator participating in a pool-based electricity market. *IET Generation, Transmission & Distribution,* 2019, vol. 13 (4), 468-477
- **MARIALAURA DI SOMMA ; GIORGIO GRADITI ; PIERLUIGI SIANO.** Optimal bidding strategy for a DER aggregator in the day-ahead market in the presence of demand flexibility. *IEEE Transactions on Industrial Electronics,* 2018, vol. 66 (2), 1509-1519
- **RICARDO J BESSA ; MANUEL A MATOS ; FILIPE JOEL SOARES ; JOÃO A PEÇAS LOPES.** Optimized bidding of a EV aggregation agent in the electricity market. *IEEE Transactions on Smart Grid,* 2012, vol. 3 (1), 443-452

- **BING HAN ; SHAOFENG LU ; FEI XUE ; LIN JIANG.** Day-ahead electric vehicle aggregator bidding strategy using stochastic programming in an uncertain reserve market. *IET Generation, Transmission & Distribution,* 2019, vol. 13 (12), 2517-2525
- **JOSÉ IRIA ; FILIPE SOARES ; MANUEL MATOS.** Optimal bidding strategy for an aggregator of prosumers in energy and secondary reserve markets. *Applied Energy,* 2019, vol. 238, 1361-1372
- **EMMANOUIL VALSOMATZIS ; TORBEN BACH PEDERSEN ; ALBERTO ABELLO.** Day-Ahead Trading of Aggregated Energy Flexibility. In Proceedings of the Ninth International Conference on Future Energy Systems (Karlsruhe, Germany) (e-Energy' 18). *Association for Computing Machinery,* 2018, 134-138
- **DOMINIK DANNER ; JAN SEIDEMANN ; MICHAEL LECHL ; HERMANN DE MEER.** Flexibility Disaggregation under Forecast Conditions. *Proceedings of the Twelfth ACM International Conference on Future Energy Systems (Virtual Event, Italy) (e-Energy '21). Association for Computing Machinery,* 2021, 27-38
- **AHMAD ATTARHA ; PAUL SCOTT ; SYLVIE THIÉBAUX.** Network-Aware Participation of Aggregators in NEM Energy and FCAS Markets. *Proceedings of the Eleventh ACM International Conference on Future Energy Systems (Virtual Event, Australia) (e-Energy '20). Association for Computing Machinery,* 2020, 14-24
- **IOANNIS BOUKAS ; DAMIEN ERNST ; THIBAUT THÉATE ; ADRIEN BOLLAND ; ALEXANDRE HUYNEN ; MARTIN BUCHWALD ; CHRISTELLE WYNANTS ; BERTRAND CORNÉLUSSE.** A deep reinforcement learning framework for continuous intraday market bidding. *Machine Learning,* 2021, 1-53
- **R AID ; P. GRUET ; H PHAM.** An optimal trading problem in intraday electricity markets. *Financial Economics,* 2016, vol. 10 (1), 49-85

- **ILHAM NAHARUDINSYAH ; STEFFEN LIMMER.** Optimal Charging of Electric Vehicles with Trading on the Intraday Electricity Market. *Energies,* 2018, vol. 11, 6
- **PEDRO SÁNCHEZ-MARTÍN ; SARA LUMBRERAS ; ANTONIO ALBERDI-ALÉN.** Stochastic Programming Applied to EV Charging Points for Energy and Reserve Service Markets. *IEEE Transactions on Power Systems,* 2016, vol. 31 (1), 198-205
- **CHRISTOPH GOEBEL ; HANS-AMO JACOBSEN.** Aggregator-Controlled EV Charging in Pay-as-Bid Reserve Markets with Strict Delivery Constraints. *IEEE Transactions on Power Systems,* 2016, vol. 31 (6), 4447-4461
- **XIAOLIN AYON ; MARIA ANGELES MORENO ; JULIO USAOLA.** Aggregators' Optimal Bidding Strategy in Sequential Day-Ahead and Intraday Electricity Spot Markets. *Energies,* 2017, vol. 10 (4
- **TIM JANKE ; FLORIAN STEINKE.** Forecasting the Price Distribution of Continuous Intraday Electricity Trading. *Energies,* 2019, vol. 12, 22
- **MICHAL NARAJEWSKI ; FLORIAN ZIEL.** Econometric modelling and forecasting of intraday electricity prices. *Journal of Commodity Markets,* 2020, vol. 19, 100107
- *GNU Linear Programming Kit.,* 2021, https://www.gnu.org/software/glpk
- **A. WACHTER ; L. T. BIEGLER.** On the implementation of a primal-dual interior point filter line search algorithm for large-scale nonlinear programming. *Mathematical Programming,* 2006, vol. 106 (1), 25-57